# EUROPEAN PATENT SPECIFICATION

(11) **EP 4 479 887 B1**
(45) Date of publication and mention of the grant of the patent: **18.11.2026**
(21) Application number: 23755750.9
(22) Date of filing: 13.02.2023
(51) Int. Cl.: G06N 3/04

(54) **ADAPTIVE TENSOR COMPUTE KERNEL FOR SPARSE NEURAL NETWORK**
ADAPTIVER TENSORBERECHNUNGSKERN FÜR SPÄRLICHES NEURONALES NETZWERK
NOYAU ADAPTATIF DE CALCUL DE TENSEUR D'UN RÉSEAU NEURONAL ÉPARS

(30) Priority: 16.02.2022 US 202217673490
(43) Date of publication of application: 25.12.2024
(73) Proprietor: Moffett International Co., Limited, Hong Kong 999077 (HK)
(72) Inventor: ZHANG, Xiaoqian, Los Altos, California 94022 (US); YAN, Enxu, Los Altos, California 94022 (US); XIAO, Zhibin, Los Altos, California 94022 (US)
(74) Representative: Marks & Clerk LLP
(86) International application number: PCT/CN2023/075661
(87) International publication number: WO 2023/155748

(56) References cited:
- CN-A- 108 875 958
- CN-A- 113 449 857
- US-A1- 2020 134 417
- US-A1- 2020 293 858
- CHEN YU-HSIN ET AL: "Eyeriss: An Energy-Efficient Reconfigurable Accelerator for Deep Convolutional Neural Networks", IEEE JOURNAL OF SOLID-STATE CIRCUITS, IEEE, USA, vol. 52, no. 1, 8 November 2016 (2016-11-08), pages 127 - 138, XP011638633, ISSN: 0018-9200, [retrieved on 20170109], DOI: 10.1109/JSSC.2016.2616357
- YU-HSIN CHEN ET AL: "Eyeriss v2: A Flexible and High-Performance Accelerator for Emerging Deep Neural Networks", ARXIV.ORG, CORNELL UNIVERSITY LIBRARY, 201 OLIN LIBRARY CORNELL UNIVERSITY ITHACA, NY 14853, 10 July 2018 (2018-07-10), XP081250197

## Description

### TECHNICAL FIELD

The disclosure generally relates to improving neural network computing efficiency, in particular, to dynamically adjusting native tensor dimension and operation mode to adapt to different input tensor shapes and operations for sparse neural networks.

### BACKGROUND

Almost all deep learning PE (processing element) arrays are fixed in native tensor dimensions and operation mode, and typically rely on compiler to use different nested loop mapping approach to cope with different tensor shapes (e.g., input feature maps or filters) and operations. It is obviously inefficient to use the PE array to perform computations for tensor shapes or operations that are not compatible with the native tensor dimensions or operation modes of the PE array. This incompatibility is worsened for sparse neural networks with sparsity features as the inflexible native tensor shapes and modes of the PE array cannot efficiently represent and process tensors with a large number of zeros. Chen Yu-Hsin et al.: "Eyeriss: An Energy-Efficient Reconfigurable Accelerator for Deep Convolutional Neural Networks", IEEE Journal of Solid-State Circuits, IEE, USA, vol. 52, no. 1, 8 November 2016, pages 127-138 discloses a performance analysis framework that quantitatively identifies the sources of performance loss in DNN processors.

### SUMMARY

Various embodiments of the present specification may include systems, methods, and non-transitory computer-readable media for using adaptive tensor compute kernels in neural network computations.

Aspects of the invention are set out in the claims.

These and other features of the systems, methods, and non-transitory computer-readable media disclosed herein, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for purposes of illustration and description only and are not intended as a definition of the limits of the invention.

### BRIEF DESCRIPTION OF THE DRAWINGS

**FIG. 1** illustrates an exemplary system diagram for processing neural network computations in a PE array in accordance with various embodiments.
**FIG. 2** illustrates an exemplary architectural diagram of a PE array in accordance with various embodiments.
**FIG. 3** illustrates an exemplary neural network computation in a PE array using native tensor shapes in accordance with various embodiments.
**FIG. 4A** illustrates an exemplary neural network computation in a PE array using adaptive tensor shapes in accordance with various embodiments.
**FIG. 4B** illustrates an exemplary PE array with inter-cluster adders for neural network computations using adaptive tensor shapes in accordance with various embodiments.
**FIG. 5A** illustrates another exemplary neural network computation in a PE array using adaptive tensor shapes in accordance with various embodiments.
**FIG. 5B** illustrates another exemplary PE array with intra-cluster adders for neural network computations using adaptive tensor shapes in accordance with various embodiments.
**FIG. 6A** illustrates an exemplary neural network computation with a 1x1 tensor operation mode in accordance with various embodiments.
**FIG. 6B** illustrates an exemplary neural network computation with a 3x3 tensor operation mode in accordance with various embodiments.
**FIG. 7** illustrates an example method for neural network computations using adaptive tensor shapes and a 3x3 tensor operation mode in a PE array in accordance with various embodiments.
**FIG. 8** illustrates an example method for neural network computations using adaptive tensor shapes in accordance with various embodiments.
**FIG. 9** illustrates an example computer system in which any of the embodiments described herein may be implemented.

### DETAILED DESCRIPTION

Embodiments described herein provide methods, systems, apparatus for neural network computations in a PE array using adaptive tensor shapes and operation modes. In the following description, adaptive tensor compute kernels are described as having multiple native tensor dimensions and operation modes to handle different shapes of input feature maps (IMFs) and weight tensors (e.g., filters). According to input and output tensor shapes and operation modes, the dimensions and operation modes of the adaptive tensor compute kernels (also referred to as adaptive native tensors) may be adjusted dynamically to fully utilize the underlying hardware resource of the PE array for parallel processing.

These adaptive tensor compute kernels address technical challenges in neural network computation (identified in the Background section) by providing three technical solutions. First, the adaptive tensor compute kernels may adjust shapes according to the different shapes of input/weight tensors. The different shapes of input/weight tensors may not only exist across different neural networks, but also within the same neural network pipeline. For example, when processing first few layers in a neural network, the tensors are usually configured as high resolution (more height and width) but fewer input & output channels; when processing last few layers in the neural network, the tensors may be configured as low resolution (fewer height and width) but more input & output channels. This may be because the first few layers of the neural network more focus on feature extraction from the input feature maps, whereas the last few layers of the neural network more focus on learning the underlying correlations among the extracted features.

Second, the adaptive tensor compute kernels may support two different tensor operation modes: 1x1 tensor operation mode and 3x3 tensor operation mode. In these neural network layers where the matrix multiplication involves 1x1 kernel convolution (e.g., each kernel in a weight tensor has a 1x1 shape) may be mapped to the 1x1 tensor operation mode, and any other convolutions (3x3, 5x5, 7x7, etc.) may be mapped to the 3x3 tensor operation mode. These different tensor operation modes may be dynamically determined during run-time based on the weight tensor shapes.

Third, the underlying PE array may configure each PE-internal buffer (e.g., a register file) differently to support different compression ratios and sparsity granularities of sparse neural networks. If a sparse neural network is pruned with a finer granularity (e.g., selecting one or more non-zero input channels from a small number of input channels, the small number being smaller than a threshold), the register file inside each PE may be configured as a private memory (e.g., solely used by the corresponding PE). If the sparse neural network is pruned with a coarse granularity (e.g., selecting one or more non-zero input channels from a large number of input channels, the large number being greater than a threshold), multiple register files in neighboring PEs may be configured as a multi-port memory shared by the neighboring PEs.

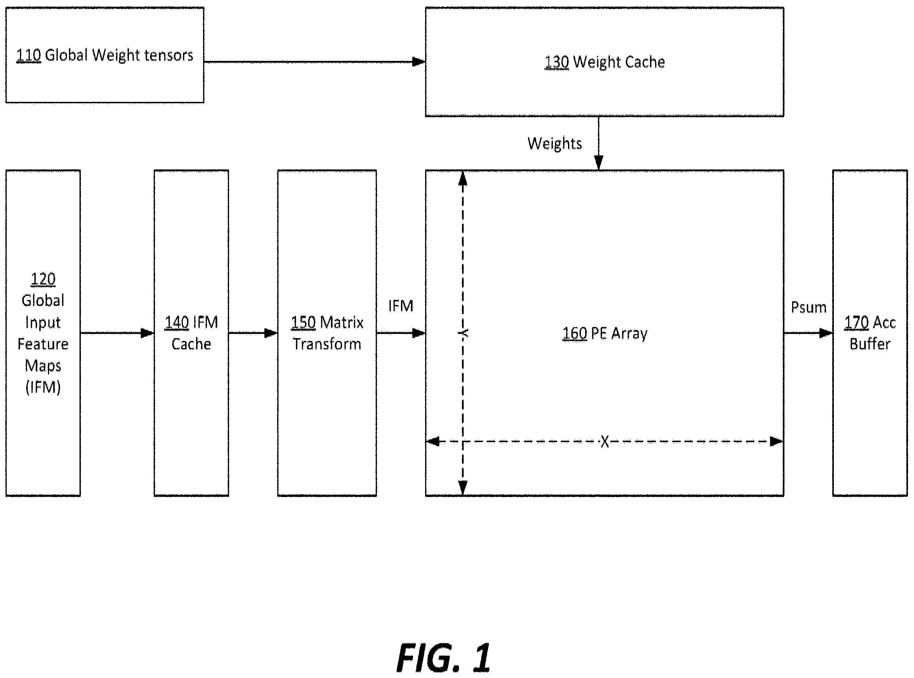

**FIG. 1** illustrates an exemplary system diagram for processing neural network computations in a PE array in accordance with various embodiments. The diagram in FIG. 1 illustrates a typical neural network computation workflow executed in a pipeline with a PE array. The embodiments described in this disclosure may be implemented as a part of the neural network computations in FIG. 1 or other suitable environments.

At a given (e.g., convolution) layer within a neural network (e.g., a CNN), one or more input feature maps (IFMs) 120 may be obtained from an input source (e.g., such as an input image) or a previous layer (e.g., such as a tensor output from the previous layer), and one or more weight tensors 110 may be used to convolve through the IFMs to extract various features. The convolution process may be carried out in parallel in an array of processing elements (PE), referred to as a PE array 160. Each PE may refer to a processor with processing capability and storage capacity (e.g., buffer or cache). The PEs may be arranged in a specific way in the PE array with interconnecting wires, and may not be dynamically re-arranged at runtime. The PE array may be re-used and involved in computations at different layers of a neural network or across different neural networks and different use cases. The incompatibility between the fixed internal PE arrangement in the PE array and potentially endless varieties of tensor shapes (in the IFMs and/or weight tensors) usually lead to inefficient resource utilization and sub-optimal parallel processing.

Referring to FIG. 1, in some embodiments, the IFMs 120 may be stored in an IFM cache 140 and the weight tensors 110 may be stored in a weight cache 130 for the consumption of the PE array 160. The PE array 160 may include a matrix (e.g., X by Y) of PEs, and each PE may include a plurality of multipliers for parallel processing. In some embodiments, each IFM from the IFM cache 140 may go through a matrix transformation layer 150 to facilitate the computation in the PE array 160. The matrix transformation may include a Toeplitz matrix transformation to reshape the IFM from an original HWC format (H refers to height, W refers to weight, and C refers to channel) to an RSC format (R refers to row, S refers to column, and C refers to channel) by using im2col tools, where the RSC format is determined based on the weight tensor shape. Here, the transformation is to duplicate and arrange the input values in the IFM to form a transformed IFM, so that the matrix multiplication between the transformed IFM and the weight tensors may be executed in the PE array 160 in a parallel manner with minimum dependency among the PEs in the PE array 160. In some embodiments, each round of parallel convolution in the PE array 160 may generate a plurality of partial sums, which may be aggregated in an accumulation buffer 170 to generate one or more output values. The output values may eventually be a part of an output tensor generated by the current layer.

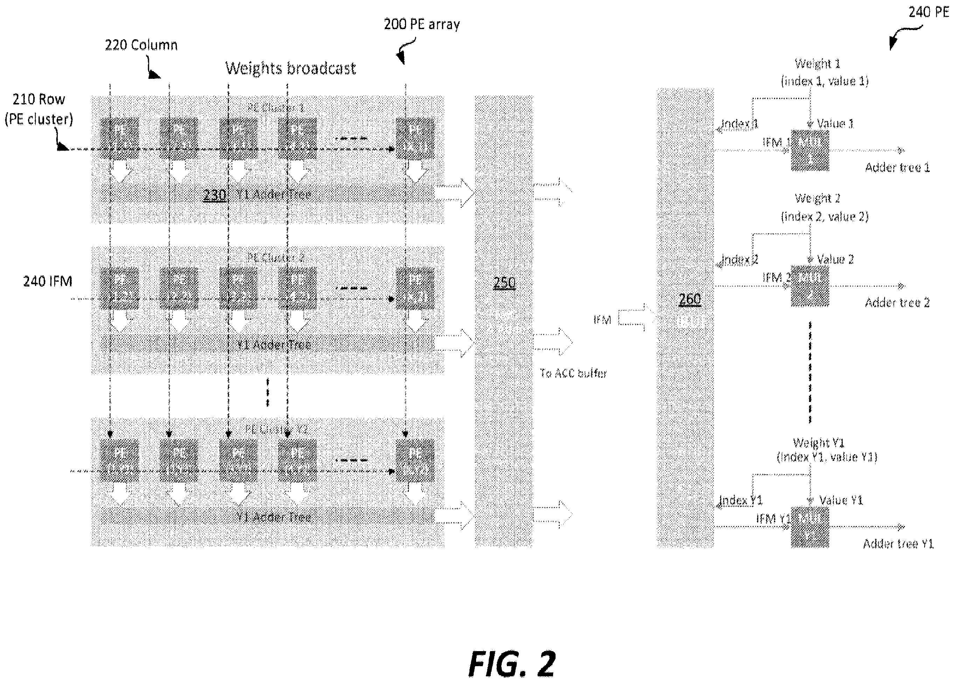

**FIG. 2** illustrates an exemplary architectural diagram of a PE array in accordance with various embodiments. The arrangement of the PEs in the PE array in FIG. 2 is for illustrative purposes, and may be implemented in other ways depending on the use case.

As shown on the left portion of FIG. 2, the PE array 200 may include a matrix of PEs. As shown on the right portion of FIG. 2, each PE 240 may include a plurality of multipliers (MUL gates). The multipliers within each PE 240 may work in parallel, and the PEs within the PE array 220 may work in parallel. For ease of reference, the following description denotes the number of columns 220 of PEs in the PE array 200 as X, the number of rows 210 of PEs in the PE array 200 as Y2, and the number of multipliers within each PE 240 as Y1. Each row of PEs 210 may be referred to as a PE cluster, and each PE cluster may be coupled to Y1 Adder Trees 230 for aggregating the partial sums generated by the multipliers within the PE cluster. That is, the first multiplier in each PE 240 within the PE cluster are coupled to the first Adder Tree 230 for aggregation, and the second multiplier in each PE 240 within the PE cluster are coupled to the second Adder Tree 230 for aggregation, and so on. The aggregation results from the Adder Trees 230 across all PE clusters (total Y1xY2 Adder Trees) may be fed into an Adder 250 for aggregation. The adder 250 may refer to a digital circuit performing addition of numbers that is part of the Network-on-Chip (NoC) subsystem.

In some embodiments, the PE array 200 may broadcast the weights to the PEs. For sparse neural networks, a large portion of the weights are zeros and thus the weights being broadcasted to the PEs are all non-zero weights. Since the non-zero weights may be from any location within the weight tensors, each weight being broadcasted may include not only the weight value but also an index indicating the location information of the weight value, i.e., in index-value pairs such as (index, weight value). Based on the index, each PE 240 may retrieve a corresponding input value from the IFM to perform multiplication with the weight value. The multiplication result may be fed into a corresponding Adder Tree. As shown in FIG. 1, the first multiplier MUL1 may receive a weight in the form of (index1, value1), retrieve an input value IFM1 based on index1 from an IBUF 260 (storing the IFM), perform the multiplication based on the input value IFM1 and value1, and send the result to Adder Tree 1 (e.g., the first Adder Tree of the Y1 Adder Trees 230 for the PE cluster in which the PE is located) for aggregation.

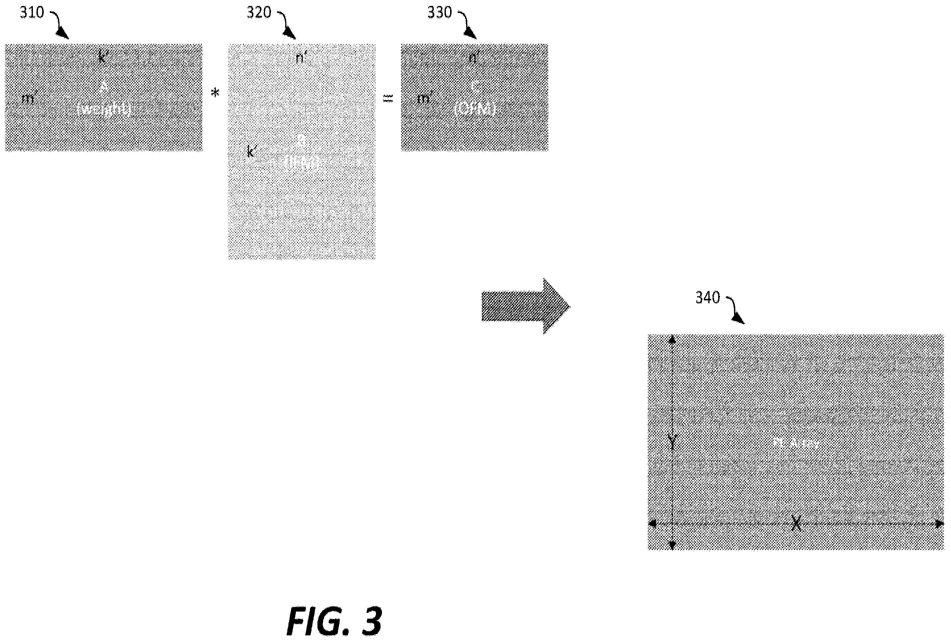

**FIG. 3** illustrates an exemplary neural network computation in a PE array using native tensor shapes in accordance with various embodiments. The illustrative computation in FIG. 3 involves a matrix multiplication between a transformed weight tensor A 310 and a transformed IFM tensor B 320, which generates an output feature map (OFM) tensor C 330. The matrix multiplication uses the native tensor shape corresponding to the PE array 340 with a dimension of X and Y.

In some embodiments, the transformed weight tensor A 310 may be obtained by aggregating all weight tensors in an RSC format (three-dimension) into a two-dimensional matrix denoted as *m^{'}* _{*} *k^{'}* (e.g., the weights from different channels are rearranged into the same channel), where *m^{'}* is the number of output channels determined by the number of weight tensors (customarily denoted as K), and *k^{'}* is a product of R, S, and C dimensions of each weight tensor (R and S refer to the dimension of each kernel in the weigh tensors, and C refers to the number of input channels).

In some embodiments, the transformed IFM tensor B 320 may be obtained by aggregating all IFMs in HWC format (three-dimension) based on the RSC format into a two-dimensional matrix denoted as *k^{'} _{*} n^{'}*, where *k^{'}* is still the product of R, S, and C dimensions of each weight tensor, and *n^{'}* is the product of H and W dimensions of the IFMs (H refers to the height and W refers to the width of the IFM). The matrix multiplication of matrix *m^{'} _{*} k^{'}* (weight tensor A 310) and matrix *k^{'}* _{*} *n^{'}* (IFM B 320) may produce the OFM tensor C 330 as a matrix of *m^{'}* _{*} *n^{'}.*

With the above transformations, the transformed weight tensor A 310 and the transformed IFM tensor B 320 may be mapped to the PEs in the PE array 340 for parallel processing. Assuming the PE array 340 includes a Y2 rows of PEs, X columns of PEs, and each PE includes Y1 multipliers, the tensors A and B may be mapped to the PE array 340 as following: the inner dimension *k^{'}* of tensor A 310 and tensor B 320 may be mapped to the X (row) dimension of the PE array 340, i.e., X=*k^{'}* = = *R _{*} S* _{*} *C*, and the multiplication of the outer dimensions *m^{'}* _{*} *n^{'}* of the tensors A and B may be mapped to the Y (column) dimension of the PE array 340. Since each column of PE includes *Y*1 * *Y*2 multipliers, the above mapping means Y= m'*n'=K*H*W multiplications will be processed by the *Y*1 * *Y*2 multipliers in parallel. For example, within each PE, one multiplier handles weights corresponding to the same output channel (e.g., weights from the same position across all weight tensors), i.e., Y1=K=m', and each column of PEs handles H*W weights in parallel, i.e., Y2=H*W=n'.

In the above description, the native tensor shape m'*k'*n' is fixed in order to map workloads (e.g., pairs of weights and corresponding input values for multiplications) to the PEs within the PE array 340, where X=k', Y1*Y2=m'*n'. It means, the native tensor shape is determined based on the layout of the PEs within the PE array. Once the layout of the PE array is fixed, the native tensor shape is fixed. All the incoming tensors (e.g., IFM and filters/weight tensors) have to be transformed according to the fixed native tensor shape. However, the incoming tensors in practical applications may vary in shapes, and the optimal parallelism is achievable when the transformation is based on the shapes of incoming tensors rather than the PE layout in the PE array 340. In many cases, even though the transformation using the fixed native tensor shape determined based on the PE layout may map the workloads to the PEs, it may also cause some serialized dependency among certain PEs (e.g., one PE has to wait for another PE's output). The following descriptions describe transformations with adaptive native tensor shapes that are determined based on the dimensions of the IFM and filters and at the same time map the workloads to the PEs to maximize parallelism.

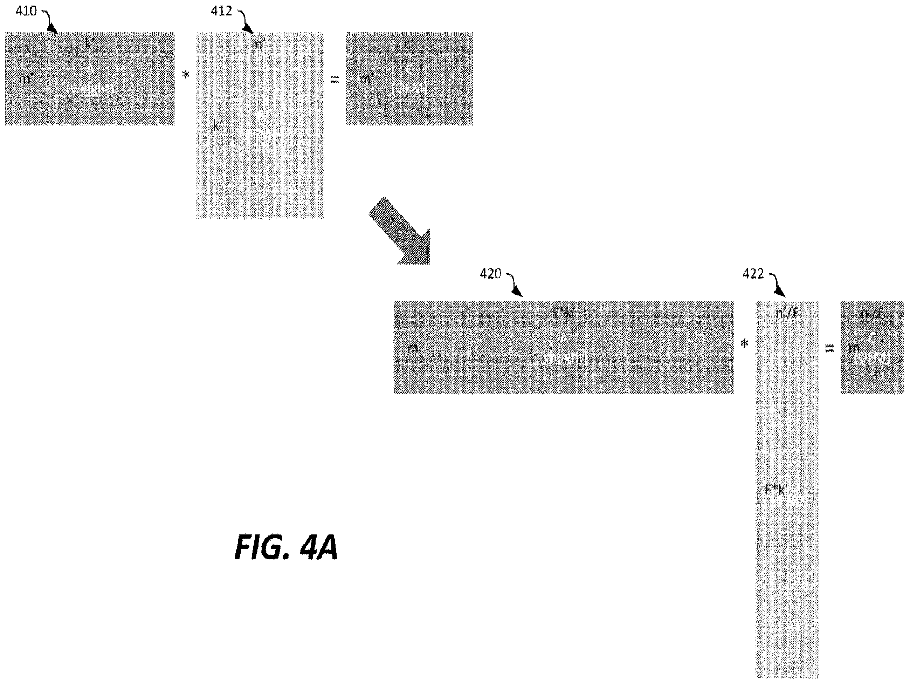

**FIG. 4A** illustrates an exemplary neural network computation in a PE array using adaptive tensor shapes in accordance with various embodiments. As described above (in FIG. 3), if an input tensor (IFM) and a weight tensor can be transformed into matrix A 410 and matrix B 420 using the fixed native tensor shape m'*k'*n' (i.e., covering the matrices A and B), the transformed tensors may be distributed to the corresponding PE array. However, in practical applications, the IFMs and weight tensors for multiplication (e.g., at different layers of a CNN, tensors that have gone through different levels of sparsification) may have various shapes that may not be perfectly mapped to the PE array. A forced transformation of the tensors using the fixed native tensor shape may leave some PEs idle or cause sequential dependencies during the calculation. For instance, within the same convolution neural network (CNN), the tensors in the first few CNN layers may have a high resolution (e.g., H*W=64) with a fewer number of input channels (C=16), and the tensors in the last few CNN layers may have a low resolution (e.g., H*W=16) with a greater number of input channels (C=64). Here, the "fewer" and "greater" is determined based on a threshold. It means that even the convolution process within the same CNN may experience tensors of different shapes.

The native tensor shape is reshaped dynamically to accommodate the changing shapes of the input tensors and weight tensors. For example, if the input tensors change from high resolution (more pixels) with fewer input channels (e.g., in the first few CNN layers) to low-resolution with more input channels (e.g., in the last few CNN layers), the native tensor shape may be reshaped accordingly. In some embodiments, the native tensor shape has three dimensions, denoted as first_outer_dimension, inner_dimension, and second_outer_dimension. The first two dimensions (first_outer_dimension and inner_dimension) may be used to transform the weight tensors into a matrix, and the last two dimensions (inner_dimension and second_outer_dimension) may be used to transform the IFM into a matrix. The transformed matrices may provide a guideline on how the weights and input values are mapped to the PE array (e.g., how to distribute the weights and input values to reach the optimal parallelism).

In some embodiments, assuming previous tensors used a native tensor shape m'*k'*n' for mapping and transforming, and the incoming tensors have a lower resolution with more input channels in comparison to the previous tensors, the three dimensions of the native tensor shape may be reshaped to m'*(F*k')*(n'/F), where F is an integer greater than one and represents a scaling factor, and the first two dimensions (i.e., the first outer dimension m' and the inner dimension F*k') represent the weight tensor matrix 420 and the next two dimensions (i.e., the inner dimension F*k' and the second outer dimension n'/F) represent the IFM tensor matrix 422 for the convolution. That is, **the native tensor shape** scales **up its inner dimension by the factor of F, and scale down the second outer dimension (corresponding to the IFM tensor matrix) by the factor of F. This way of reshaping may be referred to as k'&n' reshaping in the following description.** In some embodiments, F may be one of 2, 4, 8, etc.

In some embodiments, the inner dimension F*k' of the reshaped tensor shape is shared by the weight tensor matrix 420 and the IFM tensor matrix 422 (e.g., they have the same inner dimension), and corresponds to the number of columns of PEs in the PE array; the first outer dimension (e.g., the outer dimension m' of the weight tensor matrix 420) corresponds to the number of multipliers within each PE; and the second outer dimension (e.g., the outer dimension n'/F of the IFM tensor matrix 422) corresponds to the number of rows of PEs in the PE array. Here, the "corresponds" refers to a mapping relationship that directs how the weights and input values in the transformed tensor matrices are distributed into the PE array. For example, the weights in each outer dimension (e.g., each column) of the weight tensor matrix 420 may be distributed to the multipliers within a single PE for parallel processing; and the input values in each outer dimension (e.g., each column) of the IFM tensor matrix 422 may be distributed across the rows of PEs in the PE array.

As shown in FIG. 4A, with this reshaped native tensor shape, the weight tensor matrix 410 may be reshaped by scaling up its inner dimension by the factor of F and keeping its outer dimension m' the same, thereby forming a new weight tensor matrix 420. That is, the inner dimension of the weight tensor matrix changes from k'=R*S*C (e.g., matrix A in 410) to *F _{*} k'* = *R* _{*} *S* _{*} (*F* _{*} *C*) (e.g., matrix A in 420), thus the new matrix 420 may support more input channels (from C to F*C). Similarly, the IFM matrix 412 may scale down its outer dimension by the factor of F, and scale up its inner dimension the same way as the scaled inner dimension of the weight tensor matrix 420, thereby forming a new IFM tensor matrix 422. That is, the inner dimension of the IFM tensor matrix changes from k'=R*S*C (e.g., matrix B in 412) to *F _{*} k'* = *R _{*} S _{*}* (*F _{*} C*) (e.g., matrix B in 422), and the outer dimension of the IFM tensor matrix changes from n' (e.g., matrix B in 412) to n'/F (e.g., matrix B in 422), thus the new matrix 422 may support less pixels. Therefore, the new matrix 420 and 422 are more suitable for representing the tensors from the last few CNN layers that have a low resolution with more input channels. In some embodiments, the "first few CNN layers" and the "last few CNN layers" may refer to a first number of CNN layers from the beginning of the CNN structure and a second number of CNN layers from the end of the CNN structure, respectively.

As an example, the tensors from the first new CNN layers may have a high resolution H*W=64 with a fewer number of input channels C=16. Here, the "fewer number" refers to a number that is smaller than a threshold, and the threshold may be determined by a compiler configured according to the underlying PE array. The native tensor shape for these tensors from the first few CNN layers may have a shape of m'=K=16, k'=1*1*16, and n'=64, assuming the convolution is based on 1*1 kernels. When the convolution proceeds to the last few CNN layers, the tensors may have a low resolution H*W=16 but with more input channels C=64 (e.g., greater than the threshold), the native tensor shape may be reshaped as m'=K=16, k'=1*1*64, and n'=16.

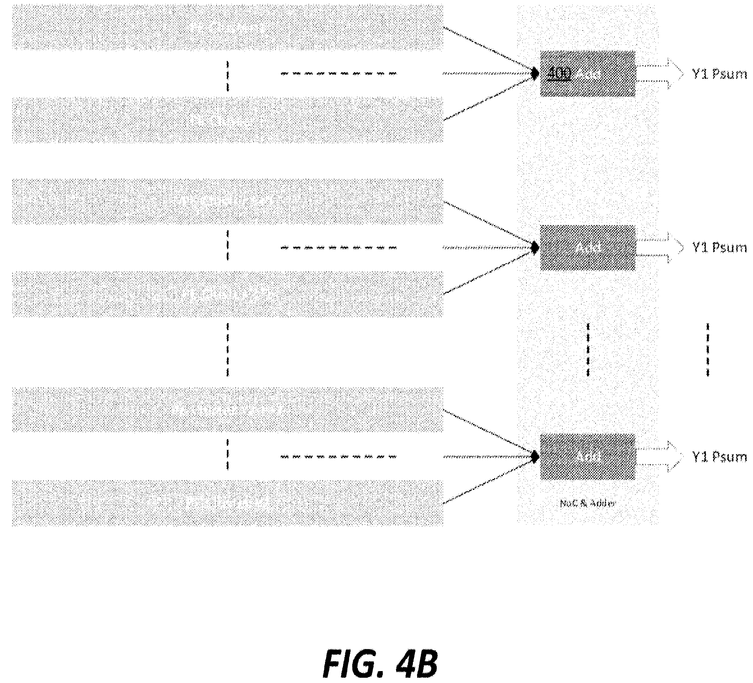

After transforming the tensors using the above-described **k'&n'** reshaping, the transformed tensor matrices 420 and 422 may be distributed into the PE array for parallel processing. **FIG. 4B** illustrates an exemplary PE array with inter-cluster adders for neural network computations using **k'&n'** reshaping-based adaptive tensor shapes in accordance with various embodiments. The parallel processing scheme using the PE array illustrated in FIG. 4B may correspond to the **k'&n'** reshaping of the native tensor described in FIG. 4A. For consistency, it is still assumed that the PE array has Y2 rows and X columns of PEs, and each PE has Y1 multipliers.

With the **k'&n'** reshaping, the inner dimension of the weight tensor matrix and the IFM tensor matrix is scaled up by F times, and the outer dimension of the IFM tensor matrix is scaled down by F times. The distribution of the weights and input values into the PE array may have the weights from the same row of the weight tensor matrix (i.e., along the scaled up inner dimension/row) and the input values from the same column of the IFM tensor matrix (i.e., also along the scaled up inner dimension/column) assigned to the PEs by rows. It means, these weight and input value pairs may be distributed across F rows of PEs. Therefore, the PE array may have inter-cluster (i.e., between PE clusters or rows) Adders 400 to aggregate the outputs generated by each row of PEs in order to obtain partial sums of the convolution process. Each inter-cluster Adder 400 may aggregate the outputs from the Y1 adder trees of F rows of PEs as Y1 partial sums. These partial sums may then be aggregated to construct the output tensor as a result of the convolution. During this process, the total number of partial sum is Y1*(Y2/F), which means the output channel number (e.g., the number of channels of the output tensor of the convolution process) is Y1 and the output pixel number is Y2/F=H*W/F.

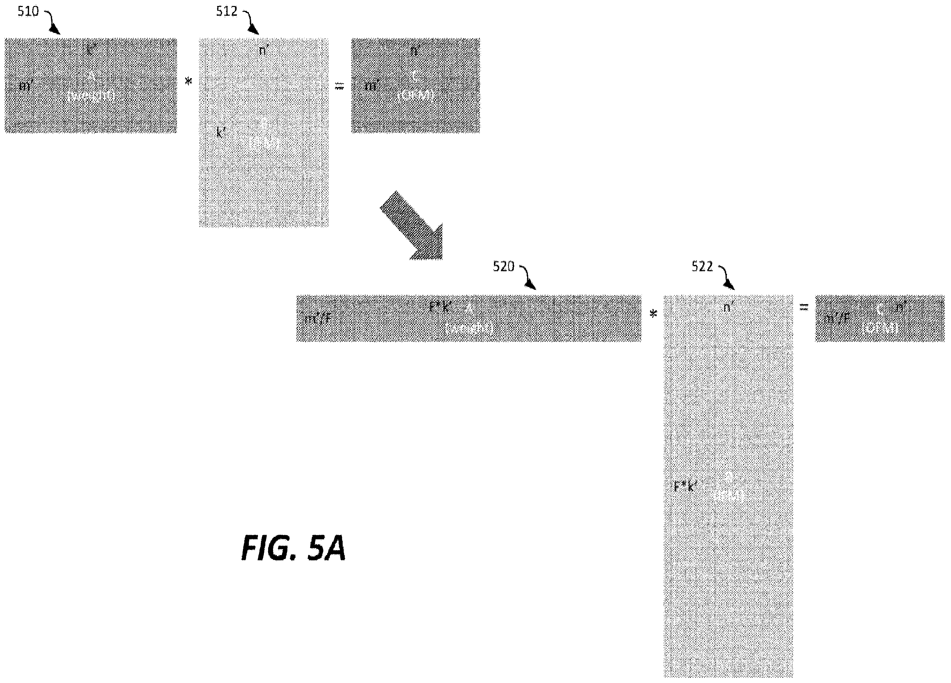

**FIG. 5A** illustrates another exemplary neural network computation in a PE array using adaptive tensor shapes in accordance with various embodiments. In comparison to the above-described **k'&n'** reshaping, the native tensor shape may also be dynamically reshaped based on the degree of sparsity of the weight tensors. In many practical applications, the weight tensors in the convolution process may be pruned or sparsified to improve computation efficiency and reduce the footprint of the neural network. Carefully pruned weight tensors may improve the convolution speed without sacrificing feature extraction accuracy by introducing zero-valued weights and thus reducing the total number of computations (e.g., zero weights are skipped). In some embodiments, pruning a weight tensor may include dividing channels of the weight tensor (also called filter) into a plurality of channel groups, with all channel groups having a same number of channels; and then only keeping a few channels of each channel group as non-zero input channels (e.g., with non-zero weights) and zero-out all other channels within that channel group (e.g., with all zero weights). After the pruning process, each of the channel groups includes the same percentage of non-zero weights. In some embodiments, the size of the channel groups (e.g., the number of channels within each channel group) for pruning may be determined based on the number of weight tensors (filters), i.e., the number of output channels. In general, the weight tensor pruning may be categorized into two levels: a high weight sparsity in which the number of output channels (e.g., the number of weight tensors) is greater than a first threshold and the number of non-zero input channels is less than a second threshold; and a low weight sparsity in which the number of output channels (e.g., the number of weight tensors) is less than the first threshold and the number of non-zero input channels is greater than the second threshold. For example, the native tensor shape for a high weight sparsity (16X) case may be m'=K=16 (e.g., 16 weight tensors or filters), k'=3*3*4 (e.g., each kernel is 3*3, and the number of non-zero channels within one filter is 4), and n'=64; while the native tensor shape for a low weight sparsity (4X) may be m'=K=4 (e.g., 4 weight tensors or filters), k'=3*3*16 (e.g., each kernel is 3*3, and the number of non-zero channels within one filter is 16), and n'=64.

In some embodiments, when the weight sparsity changes from high to low, the native tensor shape, denoted as first_outer_dimension*inner_dimension*second_outer_dimension, may be reshaped by scaling up its inner dimension (shared by the weight tensor matrix and the IFM tensor matrix) by the factor of F, and scaling down the first outer dimension (corresponding to the weight tensor matrix) by the factor of F. As shown in FIG. 5A, the original native tensor shape m'*k'*n' becomes (m'/F)*(F*k')*n', in which the weight tensor matrix 510 changes from m'*k' to the reshaped tensor matrix 520 with dimensions (m'/F)*(F*k'), and the IFM tensor matrix 512 changes from k'*n' to the reshaped IFM matrix 522 with dimensions (F*k')*n'. This way of reshaping may be referred to as k'&m' reshaping in the following description. The scaled-up inner dimension by the factor of F indicates a support of more input channels (from C to F*C), and the scaled-down outer dimension of the weight tensor matrix indicate a fewer output channels (from K to K/F).

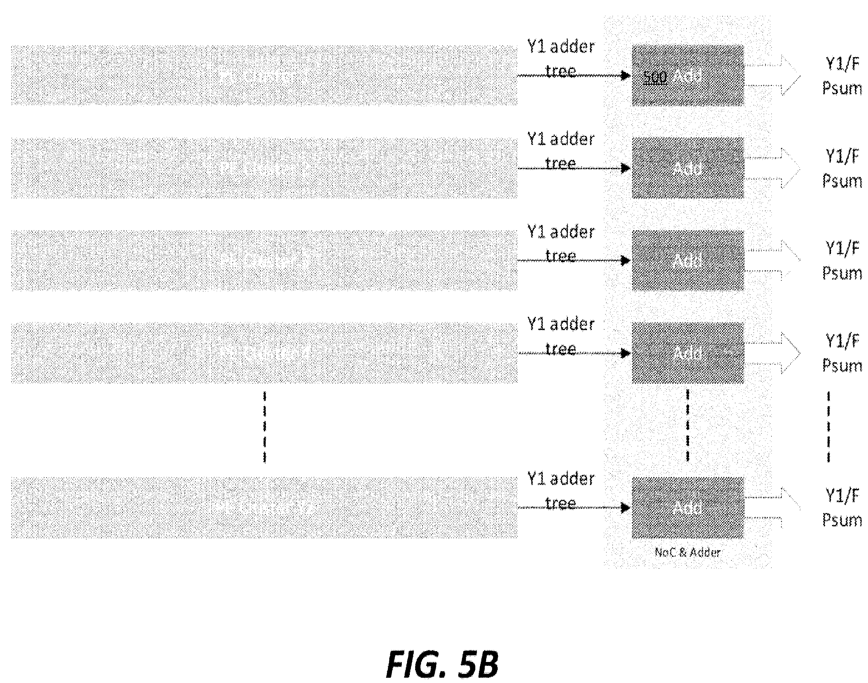

After transforming the tensors using the above-described **k'&m'** reshaping, the transformed tensor matrices 520 and 522 may be distributed into the PE array for parallel processing. **FIG. 5B** illustrates another exemplary PE array with inter-cluster adders for neural network computations using **k'&m'** reshaping-based adaptive tensor shapes in accordance with various embodiments. The parallel processing scheme using the PE array illustrated in FIG. 5B may correspond to **k'&m'** reshaping of the native tensor described in FIG. 5A.

For consistency, it is still assumed that the PE array has Y2 rows and X columns of PEs, and each PE has Y1 multipliers. In addition, the weight and IFM matrices 520 and 522 have a same inner dimension corresponding to the number (X) of columns of PEs in the PE array, an outer dimension of the weight matrix 520 corresponds to the number (Y1) of multipliers within each PE in the PE array, and an outer dimension of the IFM matrix 522 corresponds to the number (Y2) of rows of PEs in the PE array.

Since the reshaped native tensor has first outer dimension (corresponding to the outer dimension of the weight matrix 520) as m'/F, the weights in the each column of the weight tensor matrix may be fed into Y1/F multipliers within each PE. In order to obtain a partial sum from the PE array, intra-cluster adders 500 may be implemented to store and aggregate the outputs from the Y1 adder trees for F rounds. Here, the "rounds" refers to cycles of performing multiplications using the multipliers in the PEs. During each round, the output of Y1/F multipliers may be temporarily stored in one intra-cluster adder 500. After F rounds, the intra-cluster add 500 may have F*Y1/F=Y1 partial sums collected from the Y1 adder trees. These partial sums may then be aggregated to construct the output tensor as a result of the convolution. During this process, the total number of partial sum is *Y1/F)*Y2, which means the output channel number (e.g., the number of channels of the output tensor of the convolution process) is Y1/F and the output pixel number is Y2=H*W.

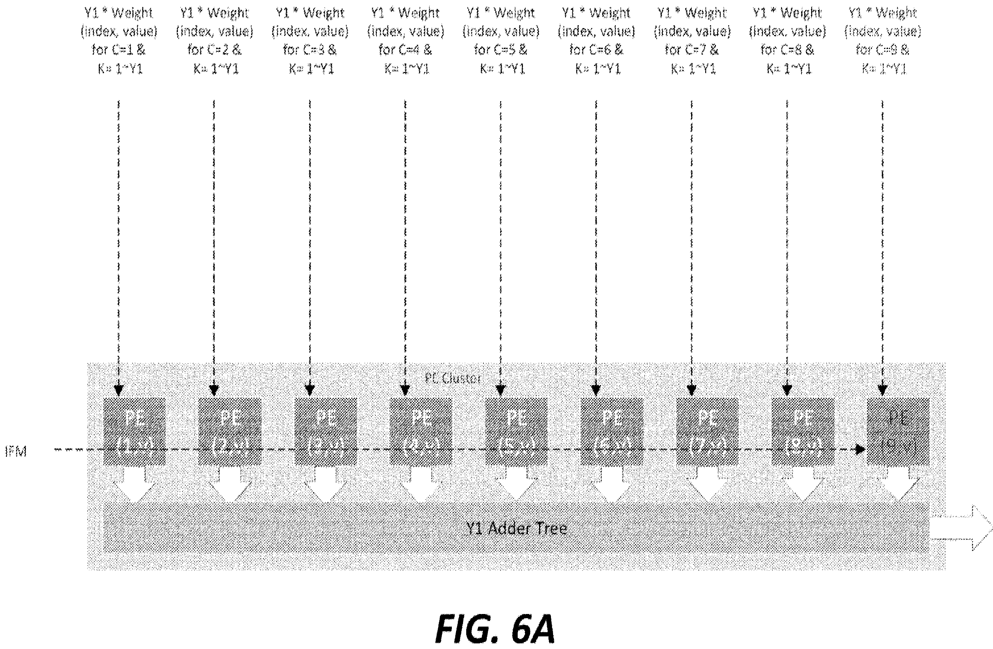

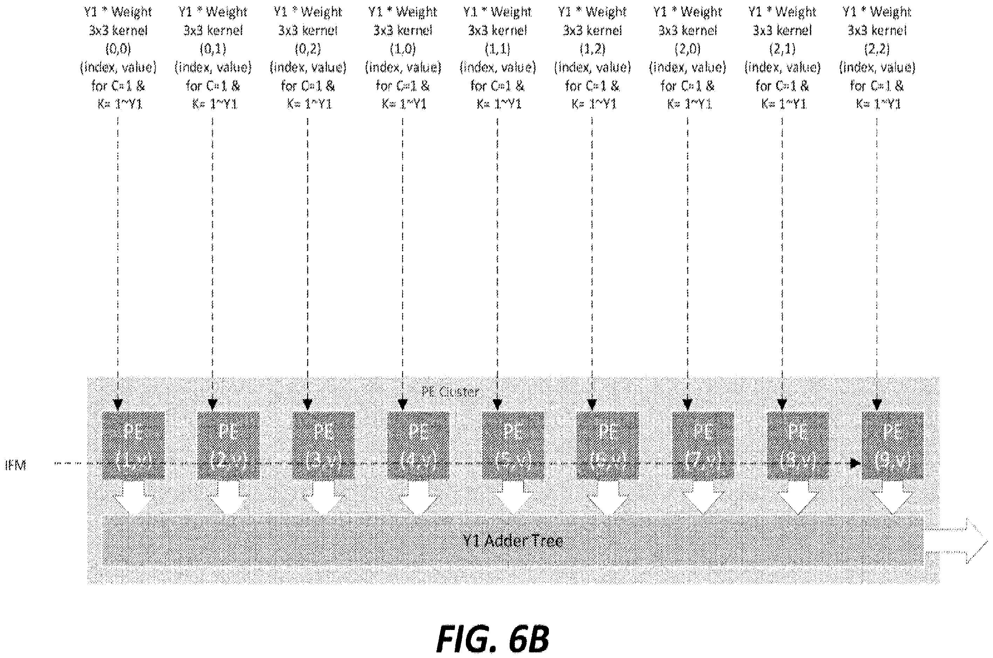

In the field of convolutional neural networks, a weight tensor may be referred to a 3D filter, which includes a plurality of 2D kernels. The number of the 2D kernels within each 3D filter may be referred to as the number of channels in the filter, and each 2D kernel may be a one by one or three by three matrix. **FIG. 6A** illustrates an exemplary neural network computation with a 1x1 tensor operation mode (i.e., using one by one kernels) in accordance with various embodiments, and **FIG. 6B** illustrates an exemplary neural network computation with a 3x3 tensor operation mode (i.e., using three by three kernels) in accordance with various embodiments.

In some embodiments, general matrix multiplications (GEMM) and 1x1 convolution operations may be mapped to the 1x1 operation mode (e.g., using 1x1 kernels). As shown in FIG. 6A, the 2D kernels (i.e., the weights) from different input channels (or channel groups for sparsified input tensor) may be placed in different columns of PEs so that the plurality of input channels are processed simultaneously at one time, and the 2D kernels from the same input channel may be distributed among multipliers within one PE so that the multipliers can simultaneously process multiple output channels at one time. For example, a number Y1 of weights from channel 1 (C=1) and 1~Y1 kernels from filters (i.e., the weights from the same input channel of the multiple filters) may be fed into the first PE, and a number Y1 of weights from channel 2 (C=2) and 1~Y1 kernels from filters may be fed into the second PE. This way, the 2D kernels from different input channels are distributed among the columns of PEs.

In some embodiments involving sparsified input tensors, each weight may be represented as an index-value pair. The value of the index-value pair is the value of a non-zero weight, and the index of the index-value pair is the index of the non-zero weight, which may be used to identify the corresponding input value to perform the multiplication with one multiplier. In some embodiments, if the number of channels is less than the number of PEs within each PE cluster (each row), the remaining PEs may be used for other vector operations.

In some embodiments, convolutions other than 1x1 convolution operations described above may be decomposed into one or more 3x3 convolution and mapped to 3x3 native operation mode (e.g., using 3x3 kernels). As shown in FIG. 6B, each 2D 3*3 kernel has nine weights from the same input channel, denoted as (0,0), (0,1), (0,2), (1,0), (1,1), (1,2), (2,0), (2,1), (2,2), which may be distributed in the same row (different columns) of PEs for simultaneous processing. The nine weights from a different input channel may be distributed in a different row of PEs.

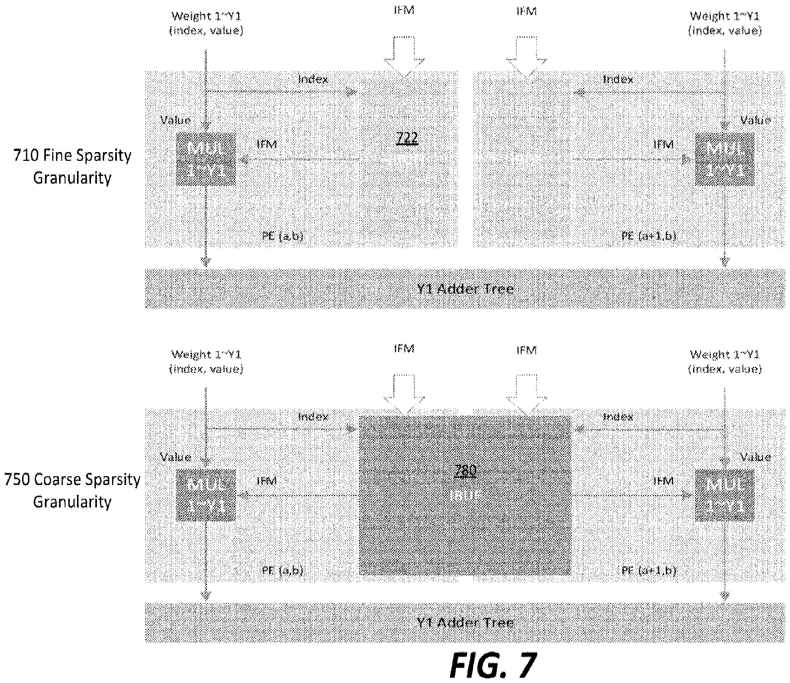

**FIG. 7** illustrates example architectural diagrams of internal buffers in a PE array in accordance with various embodiments. In some embodiments, each PE in the PE array is coupled with a Input Buffer (denoted as IBUF) 722 for storing input values. These input values may be retrieved by the PE based on a given weight index to find the corresponding input value. The retrieved input value may then be multiplied with the weight value within a multiplier in the PE. In practical implementation, the depth of the IBUF is usually limited, which means one IBUF 722 may only store the input values from a fixed number of input channels. This design works well for sparsified input tensors because the number of non-zero input channels is also limited. However, it is often seen that the number of non-zero input channels may go over the depth of the IBUF 722. In these cases, the IBUF 722 may have to perform cache replacement to read necessary input values from external memories, which are expensive and inefficient.

In some embodiments, depending on the degree of the sparsification of the weight tensors (filters), the IBUF of each PE may be configured as a private memory or a shared memory. For example, sparsifying one or more weight tensors may include: dividing input channels of the one or more weight tensors into a plurality of channel groups, each channel group including a fixed number of channels that is an integer greater than one; and pruning each of the one or more weight tensors so that only a few channels in each of the plurality of channel groups includes non-zero input values and other channels in the each channel group comprise all zeros. After the pruning process, each of the channel groups includes the same percentage of non-zero weights. The granularity of the sparsification may be categorized as fine-granular 710 and coarse-granular 750. The fine-granular sparsification 710 occurs when non-zero input channel is selected from a number of channels that is smaller than a fixed number, and the coarse-granular sparsification 750 occurs when non-zero input channel is selected from a number of channels that is greater than the fixed number. For example, if weight sparsity is 15/16 (1 non-zero input channel out of 16 channels), selecting one non-zero input channel from every 16 input channels (e.g., one channel group includes 16 input channels) may be determined as fine-granular sparsification 710, while selecting 4 non-zero input channels from every 64 input channels (e.g., one channel group includes 64 input channels) may be determined as coarse-granular sparsification 750.

In some embodiments, the IBUF 722 may be configured as a private memory for the sparse weight tensors with fine-granularity, or a shared memory for the sparse tensors with coarse-granularity. It means, the depth of the IBUF 722 may be compared with the fixed number that is used for categorizing fine-granular and coarse-granular sparsification. If the depth of the IBUF 722 is greater than the fixed number, it means the IBUF 722 is sufficient to store the necessary input values. This way, the data retrieving performance is optimal due to the dedicated private memory. If the depth of the IBUF 722 is smaller than the fixed number, multiple neighboring PEs may share their IBUFs, denoted as a shared IBUF 780, to store the input values that may be retrieved by them. This way, the duplicated input values are reduced and the overall storage efficiency is improved.

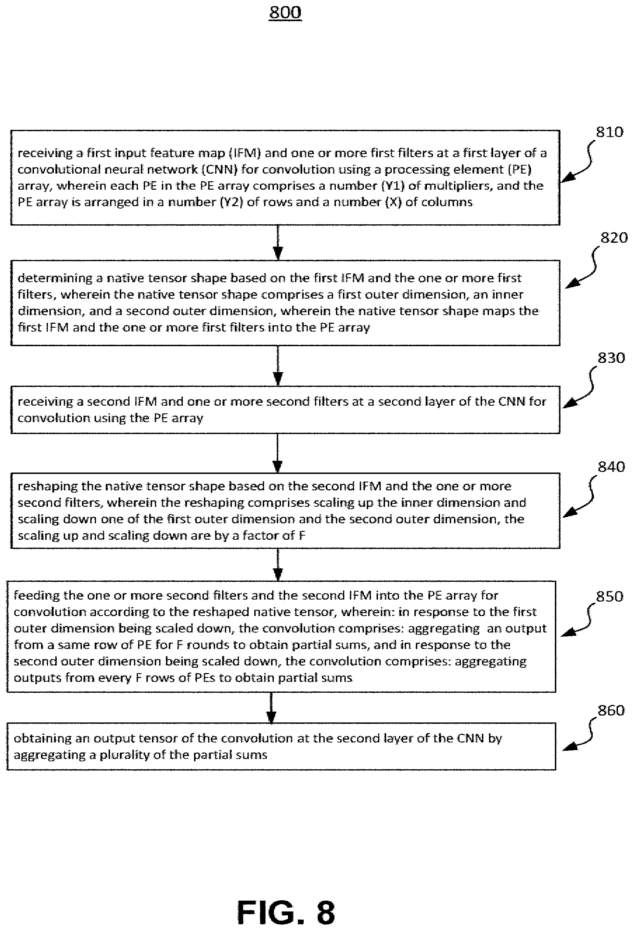

**FIG. 8** illustrates an example method 800 for neural network computations using adaptive tensor shapes in accordance with various embodiments. The method 800 may be performed by a device, apparatus, or system described in FIGs. 1-7. The operations of the method 800 presented below are intended to be illustrative. Depending on the implementation, the method 800 may include additional, fewer, or alternative steps performed in various orders or in parallel.

Block 810 includes receiving a first input feature map (IFM) and one or more first filters at a first layer of a convolutional neural network (CNN) for convolution using a processing element (PE) array, wherein each PE in the PE array comprises a number (Y1) of multipliers, and the PE array is arranged in a number (Y2) of rows and a number (X) of columns. In some embodiments, each row of PEs are coupled with a number (Y1) of adder trees respective corresponding to the number (Y1) of multipliers within each PE, wherein each multiplier within each PE sends a multiplication output to a corresponding adder tree for aggregation. The number (Y1) of multipliers within each PE process data in parallel, and PEs in the PE array process data in parallel.

Block 820 includes determining a native tensor shape based on the first IFM and the one or more first filters, wherein the native tensor shape comprises a first outer dimension, an inner dimension, and a second outer dimension, wherein the native tensor shape maps the first IFM and the one or more first filters into the PE array.

Block 830 includes receiving a second IFM and one or more second filters at a second layer of the CNN for convolution using the PE array. In some embodiments, the second layer of the CNN is after the first layer of the CNN, and the second IFM comprises more input channels than the first IFM, and a lower resolution than the first IFM. In some embodiments, each of the one or more second filters comprises a plurality of channels of 2-dimensional (2D) kernels, each 2D kernel having a dimension of one by one (1x1) or three by three (3x3).

Block 840 includes reshaping the native tensor shape based on the second IFM and the one or more second filters, wherein the reshaping comprises scaling up the inner dimension and scaling down one of the first outer dimension and the second outer dimension, the scaling up and scaling down are by a factor of F.

Block 850 includes feeding the one or more second filters and the second IFM into the PE array for convolution according to the reshaped native tensor, wherein: in response to the first outer dimension being scaled down, the convolution comprises: aggregating an output from a same row of PE for F rounds to obtain partial sums, and in response to the second outer dimension being scaled down, the convolution comprises: aggregating outputs from every F rows of PEs to obtain partial sums. In some embodiments, the feeding of the one or more second filters into the PE array according to the reshaped native tensor comprises: transforming the one or more second filters into a matrix according to the first outer dimension and the inner dimension of the reshaped native tensor, wherein in response to each 2D kernel in the one or more second filters having the dimension of one by one, each row of the matrix comprises weights from different input channels of the one or more second filters; and distributing weights in each row of the matrix to different columns of PEs so that the plurality of input channels are processed simultaneously at one time. In some embodiments, the feeding of the one or more second filters into the PE array according to the reshaped native tensor comprises: transforming the one or more second filters into a matrix according to the first outer dimension and the inner dimension of the reshaped native tensor, wherein in response to each 2D kernel in the one or more second filters having the dimension of three by three and comprising nine weights, the nine weights are placed in a same row of the matrix; and distributing the nine weights from the same row of the matrix to different columns of PEs so that the weights from the same channel are processed simultaneously at one time. In some embodiments, the feeding of the IFM into the PE array according to the reshaped native tensor comprises: transforming the IFM into a matrix according to with the inner dimension and the second outer dimension of the reshaped native tensor; and feeding input values of the IFM corresponding to a column of the matrix into buffers of a row of PEs.

Block 860 includes obtaining an output tensor of the convolution at the second layer of the CNN by aggregating a plurality of the partial sums.

In the above description, Y1, Y2, X, and F are all integers greater than one.

In some embodiments, the method 800 may further include dividing channels of the one or more filters into a plurality of channel groups, each channel group comprising a fixed number of channels that is an integer greater than one; and pruning each of the one or more filters so that only one a few channels in each of the plurality of channel groups comprise non-zero input values and other channels in the each channel group comprise all zeros. In some embodiments, the method 800 may further include: determining a depth of a buffer associated with each PE in the PE array; in response to the depth of the buffer being greater than the fixed number, configuring the buffer as a private memory for each PE; and in response to the depth of the buffer being smaller than the fixed number, combining the buffer of the PE and one or more buffers of neighboring PEs as a shared memory. In some embodiments, the private memory of each PE stores input values that are retrievable by the number (Y1) of multipliers within the PE, and the shared memory stores input values that are retrievable by the number (Y1) of multipliers within the PE and the one or more neighboring PEs.

In some embodiments, each of the one or more second filters comprises a plurality of non-zero weights, and the feeding of the one or more second filters into the PE array for convolution comprises: feeding each non-zero weight into a multiplier of a corresponding PE as an index-value pair comprising the non-zero weight and a corresponding index; and the convolution comprises: retrieving an input value from a buffer of the corresponding PE according to the index; and sending the retrieved value and the non-zero weight into the multiplier to obtain an output; and sending the output to a corresponding adder tree for aggregation with outputs generated by other multipliers of other PEs in a same row as the corresponding PE.

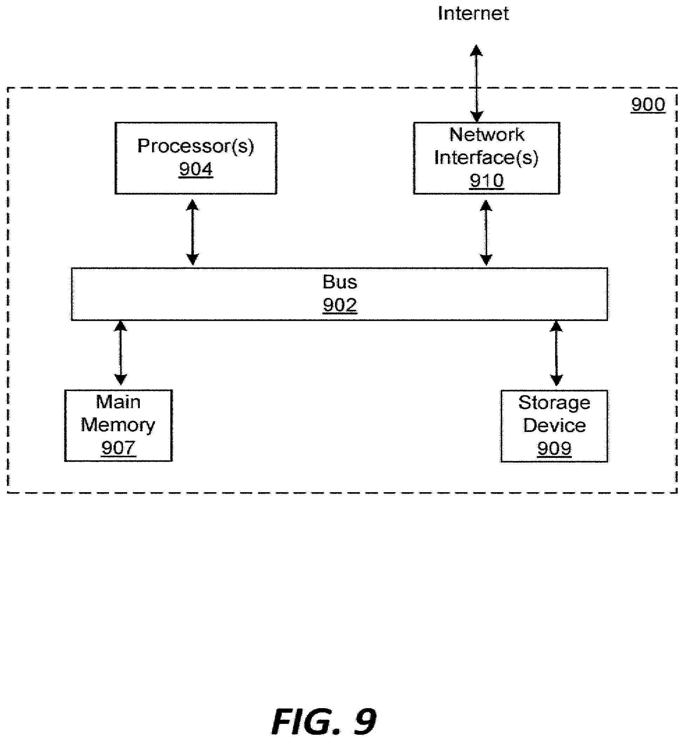

**FIG. 9** illustrates an example computing device in which any of the embodiments described herein may be implemented. The computing device may be used to implement one or more components of the systems and the methods shown in FIGs. 1-8. The computing device 900 may comprise a bus 902 or other communication mechanisms for communicating information and one or more hardware processors 904 coupled with bus 902 for processing information. Hardware processor(s) 904 may be, for example, one or more general-purpose microprocessors.

The computing device 900 may also include a main memory 907, such as random-access memory (RAM), cache and/or other dynamic storage devices, coupled to bus 902 for storing information and instructions to be executed by processor(s) 904. Main memory 907 also may be used for storing temporary variables or other intermediate information during execution of instructions to be executed by processor(s) 904. Such instructions, when stored in storage media accessible to processor(s) 904, may render computing device 900 into a special-purpose machine that is customized to perform the operations specified in the instructions. Main memory 907 may include non-volatile media and/or volatile media. Non-volatile media may include, for example, optical or magnetic disks. Volatile media may include dynamic memory. Common forms of media may include, for example, a floppy disk, a flexible disk, hard disk, solid-state drive, magnetic tape, or any other magnetic data storage medium, a CD-ROM, any other optical data storage medium, any physical medium with patterns of holes, a RAM, a DRAM, a PROM, and EPROM, a FLASH-EPROM, NVRAM, any other memory chip or cartridge, or networked versions of the same.

The computing device 900 may implement the techniques described herein using customized hard-wired logic, one or more ASICs or FPGAs, firmware and/or program logic which in combination with the computing device may cause or program computing device 900 to be a special-purpose machine. According to one embodiment, the techniques herein are performed by computing device 900 in response to processor(s) 904 executing one or more sequences of one or more instructions contained in main memory 907. Such instructions may be read into main memory 907 from another storage medium, such as storage device 909. Execution of the sequences of instructions contained in main memory 907 may cause processor(s) 904 to perform the process steps described herein. For example, the processes/methods disclosed herein may be implemented by computer program instructions stored in main memory 907. When these instructions are executed by processor(s) 904, they may perform the steps as shown in corresponding figures and described above. In alternative embodiments, hard-wired circuitry may be used in place of or in combination with software instructions.

The computing device 900 also includes a communication interface 910 coupled to bus 902. Communication interface 910 may provide a two-way data communication coupling to one or more network links that are connected to one or more networks. As another example, communication interface 910 may be a local area network (LAN) card to provide a data communication connection to a compatible LAN (or WAN component to communicated with a WAN). Wireless links may also be implemented.

The performance of certain of the operations may be distributed among the processors, not only residing within a single machine, but deployed across a number of machines. In some example embodiments, the processors or processor-implemented engines may be located in a single geographic location (e.g., within a home environment, an office environment, or a server farm). In other example embodiments, the processors or processor-implemented engines may be distributed across a number of geographic locations.

Each of the processes, methods, and algorithms described in the preceding sections may be embodied in, and fully or partially automated by, code modules executed by one or more computer systems or computer processors comprising computer hardware. The processes and algorithms may be implemented partially or wholly in application-specific circuitry.

When the functions disclosed herein are implemented in the form of software functional units and sold or used as independent products, they can be stored in a processor executable non-volatile computer-readable storage medium. Particular technical solutions disclosed herein (in whole or in part) or aspects that contributes to current technologies may be embodied in the form of a software product. The software product may be stored in a storage medium, comprising a number of instructions to cause a computing device (which may be a personal computer, a server, a network device, and the like) to execute all or some steps of the methods of the embodiments of the present application. The storage medium may comprise a flash drive, a portable hard drive, ROM, RAM, a magnetic disk, an optical disc, another medium operable to store program code, or any combination thereof.

Particular embodiments further provide a system comprising a processor and a non-transitory computer-readable storage medium storing instructions executable by the processor to cause the system to perform operations corresponding to steps in any method of the embodiments disclosed above. Particular embodiments further provide a non-transitory computer-readable storage medium configured with instructions executable by one or more processors to cause the one or more processors to perform operations corresponding to steps in any method of the embodiments disclosed above.

Embodiments disclosed herein may be implemented through a cloud platform, a server or a server group (hereinafter collectively the "service system") that interacts with a client. The client may be a terminal device, or a client registered by a user at a platform, wherein the terminal device may be a mobile terminal, a personal computer (PC), and any device that may be installed with a platform application program.

The various operations of exemplary methods described herein may be performed, at least partially, by an algorithm. The algorithm may be comprised in program codes or instructions stored in a memory (e.g., a non-transitory computer-readable storage medium described above). Such algorithm may comprise a machine learning algorithm. In some embodiments, a machine learning algorithm may not explicitly program computers to perform a function but can learn from training samples to make a prediction model that performs the function.

The various operations of exemplary methods described herein may be performed, at least partially, by one or more processors that are temporarily configured (e.g., by software) or permanently configured to perform the relevant operations. Whether temporarily or permanently configured, such processors may constitute processor-implemented engines that operate to perform one or more operations or functions described herein.

Similarly, the methods described herein may be at least partially processor-implemented, with a particular processor or processors being an example of hardware. For example, at least some of the operations of a method may be performed by one or more processors or processor-implemented engines. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an Application Program Interface (API)).

The performance of certain of the operations may be distributed among the processors, not only residing within a single machine, but deployed across a number of machines. In some example embodiments, the processors or processor-implemented engines may be located in a single geographic location (e.g., within a home environment, an office environment, or a server farm). In other example embodiments, the processors or processor-implemented engines may be distributed across a number of geographic locations.

The term "include" or "comprise" is used to indicate the existence of the subsequently declared features, but it does not exclude the addition of other features. Conditional language, such as, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Although an overview of the subject matter has been described with reference to specific example embodiments, various modifications and changes may be made to these embodiments without departing from the broader scope of embodiments of the present disclosure. Such embodiments of the subject matter may be referred to herein, individually or collectively, by the term "invention" merely for convenience and without intending to voluntarily limit the scope of this application to any single disclosure or concept if more than one is, in fact, disclosed.

The embodiments illustrated herein are described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims.

## Claims

1. A computer-implemented method, comprising:
Receiving (810) a first input feature map, IFM, and one or more first filters at a first layer of a convolutional neural network, CNN, for convolution using a processing element, PE, array, wherein each PE in the PE array comprises a number, Y1, of multipliers, and the PE array is arranged in a number, Y2, of rows and a number, X, of columns;
Determining (820) a native tensor shape based on the first IFM and the one or more first filters, wherein the native tensor shape comprises a first outer dimension, an inner dimension, and a second outer dimension, wherein the native tensor shape maps the first IFM and the one or more first filters into the PE array;
receiving (830) a second IFM and one or more second filters at a second layer of the CNN for convolution using the PE array;
reshaping (840) the native tensor shape based on the second IFM and the one or more second filters, wherein the reshaping comprises scaling up the inner dimension and scaling down one of the first outer dimension and the second outer dimension, the scaling up and scaling down are by a factor of F;
feeding (850) the one or more second filters and the second IFM into the PE array for convolution according to the reshaped native tensor, wherein:
in response to the first outer dimension being scaled down, the convolution comprises: aggregating an output from a same row of PE for F rounds to obtain partial sums, and
in response to the second outer dimension being scaled down, the convolution comprises: aggregating outputs from every F rows of PEs to obtain partial sums; and
obtaining (860) an output tensor of the convolution at the second layer of the CNN by aggregating a plurality of the partial sums,
wherein Y1, Y2, X, and F are all integers greater than one, and
wherein the second layer of the CNN is after the first layer of the CNN, and the second IFM comprises more input channels than the first IFM, and a lower resolution than the first IFM.

2. The method of claim 1, wherein each of the one or more second filters comprises a plurality of channels of 2-dimensional, 2D, kernels, each 2D kernel having a dimension of one by one, 1x1, or three by three, 3x3.

3. The method of claim 2, wherein the feeding of the one or more second filters into the PE array according to the reshaped native tensor comprises:
transforming the one or more second filters into a matrix according to the first outer dimension and the inner dimension of the reshaped native tensor, wherein in response to each 2D kernel in the one or more second filters having the dimension of one by one, each row of the matrix comprises weights from different input channels of the one or more second filters; and
distributing weights in each row of the matrix to different columns of PEs so that the plurality of input channels are processed simultaneously at one time.

4. The method of claim 2, wherein the feeding of the one or more second filters into the PE array according to the reshaped native tensor comprises:
transforming the one or more second filters into a matrix according to the first outer dimension and the inner dimension of the reshaped native tensor, wherein in response to each 2D kernel in the one or more second filters having the dimension of three by three and comprising nine weights, the nine weights are placed in a same row of the matrix; and
distributing the nine weights from the same row of the matrix to different columns of PEs so that the weights from the same channel are processed simultaneously at one time;
and, optionally,
wherein the feeding of the IFM into the PE array according to the reshaped native tensor comprises:
transforming the IFM into a matrix according to the inner dimension and the second outer dimension of the reshaped native tensor; and
feeding input values of the IFM corresponding to a column of the matrix into buffers of a row of PEs.

5. The method of claim 1, further comprising:
dividing channels of the one or more filters into a plurality of channel groups, each channel group comprising a fixed number of channels that is an integer greater than one; and
pruning each of the plurality of channel groups so that a fixed percentage of weights within the each channel group are non-zeros.

6. The method of claim 5, further comprising:
determining a depth of a buffer associated with each PE in the PE array;
in response to the depth of the buffer being greater than the fixed number, configuring the buffer as a private memory for each PE; and
in response to the depth of the buffer being smaller than the fixed number, combining the buffer of the PE and one or more buffers of neighboring PEs as a shared memory;
and, optionally, wherein
the private memory of each PE stores input values that are retrievable by the number, Y1, of multipliers within the PE, and/or, wherein the shared memory stores input values that are retrievable by the number, Y1, of multipliers within the PE and the one or more neighboring PEs.

7. The method of claim 1, wherein each row of PEs are coupled with a number, Y1, of adder trees respective corresponding to the number, Y1, of multipliers within each PE, wherein each multiplier within each PE sends a multiplication output to a corresponding adder tree for aggregation.

8. The method of claim 1, wherein each of the one or more second filters comprises a plurality of non-zero weights, and
the feeding of the one or more second filters into the PE array for convolution comprises:
feeding each non-zero weight into a multiplier of a corresponding PE as an index-value pair comprising the non-zero weight and a corresponding index; and
the convolution comprises:
retrieving an input value from a buffer of the corresponding PE according to the index; and
sending the retrieved value and the non-zero weight into the multiplier to obtain an output; and
sending the output to a corresponding adder tree for aggregation with outputs generated by other multipliers of other PEs in a same row as the corresponding PE.

9. The method of claim 1, wherein the number, Y1, of multipliers within each PE process data in parallel, and PEs in the PE array process data in parallel.

10. A system comprising one or more processors and one or more non-transitory computer-readable memories coupled to the one or more processors and configured with instructions executable by the one or more processors to cause the system to perform operations comprising:
receiving (810) a first input feature map, IFM, and one or more first filters at a first layer of a convolutional neural network, CNN, for convolution using a processing element, PE, array, wherein each PE in the PE array comprises a number, Y1, of multipliers, and the PE array is arranged in a number, Y2, of rows and a number, X, of columns;
determining (820) a native tensor shape based on the first IFM and the one or more first filters, wherein the native tensor shape comprises a first outer dimension, an inner dimension, and a second outer dimension, wherein the native tensor shape maps the first IFM and the one or more first filters into the PE array;
receiving (830) a second IFM and one or more second filters at a second layer of the CNN for convolution using the PE array;
reshaping (840) the native tensor shape based on the second IFM and the one or more second filters, wherein the reshaping comprises scaling up the inner dimension and scaling down one of the first outer dimension and the second outer dimension, the scaling up and scaling down are by a factor of F;
feeding (850) the one or more second filters and the second IFM into the PE array for convolution according to the reshaped native tensor, wherein:
in response to the first outer dimension being scaled down, the convolution comprises: aggregating an output from a same row of PE for F rounds to obtain partial sums, and
in response to the second outer dimension being scaled down, the convolution comprises: aggregating outputs from every F rows of PEs to obtain partial sums; and
obtaining (860) an output tensor of the convolution at the second layer of the CNN by aggregating a plurality of the partial sums,
wherein Y1, Y2, X, and F are all integers greater than one, and
wherein the second layer of the CNN is after the first layer of the CNN, and the second IFM comprises more input channels than the first IFM, and a lower resolution than the first IFM.

11. The system of claim 10, wherein the operations further comprise:
dividing channels of the one or more filters into a plurality of channel groups, each channel group comprising a fixed number of channels that is an integer greater than one; and
pruning each of the one or more filters so that only one channel in each of the plurality of channel groups comprises non-zero input values and other channels in the each channel group comprise all zeros, and, optionally,
wherein the operations further comprise:
determining a depth of a buffer associated with each PE in the PE array;
in response to the depth of the buffer being greater than the fixed number, configuring the buffer as a private memory for each PE; and
in response to the depth of the buffer being smaller than the fixed number, combining the buffer of the PE and one or more buffers of neighboring PEs as a shared memory.

12. The system of claim 10, wherein each of the one or more second filters comprises a plurality of channels of 2-dimensional, 2D, kernels, each 2D kernel having a dimension of one by one, 1x1, or three by three, 3x3, and, optionally,
wherein the feeding of the one or more second filters into the PE array according to the reshaped native tensor comprises:
transforming the one or more second filters into a matrix according to the first outer dimension and the inner dimension of the reshaped native tensor, wherein in response to each 2D kernel in the one or more second filters having the dimension of one by one, each row of the matrix comprises weights from different input channels of the one or more second filters; and
distributing weights in each row of the matrix to different columns of PEs so that the plurality of input channels are processed simultaneously at one time.

13. A non-transitory computer-readable storage medium configured with instructions executable by one or more processors to cause the one or more processors to perform operations comprising:
receiving (810) a first input feature map, IFM, and one or more first filters at a first layer of a convolutional neural network, CNN, for convolution using a processing element, PE, array, wherein each PE in the PE array comprises a number, Y1, of multipliers, and the PE array is arranged in a number, Y2, of rows and a number, X, of columns;
determining (820) a native tensor shape based on the first IFM and the one or more first filters, wherein the native tensor shape comprises a first outer dimension, an inner dimension, and a second outer dimension, wherein the native tensor shape maps the first IFM and the one or more first filters into the PE array;
receiving (830) a second IFM and one or more second filters at a second layer of the CNN for convolution using the PE array;
reshaping (840) the native tensor shape based on the second IFM and the one or more second filters, wherein the reshaping comprises scaling up the inner dimension and scaling down one of the first outer dimension and the second outer dimension, the scaling up and scaling down are by a factor of F;
feeding (850) the one or more second filters and the second IFM into the PE array for convolution according to the reshaped native tensor, wherein:
in response to the first outer dimension being scaled down, the convolution comprises: aggregating an output from a same row of PE for F rounds to obtain partial sums, and
in response to the second outer dimension being scaled down, the convolution comprises: aggregating outputs from every F rows of PEs to obtain partial sums; and
obtaining (860) an output tensor of the convolution at the second layer of the CNN by aggregating a plurality of the partial sums,
wherein Y1, Y2, X, and F are all integers greater than one; and
wherein the second layer of the CNN is after the first layer of the CNN, and the second IFM comprises more input channels than the first IFM, and a lower resolution than the first IFM.

## Patentansprüche

1. Computerimplementiertes Verfahren, umfassend:
Empfangen (810) einer ersten Eingabemerkmalskarte, IFM, und eines oder mehrerer erster Filter in einer ersten Schicht eines konvolutionellen neuronalen Netzes, CNN, zur Konvolution unter Verwendung eines Verarbeitungselement-, PE, Arrays, wobei jedes PE im PE-Array eine Anzahl, Y1, von Multiplikatoren umfasst und das PE-Array in einer Anzahl, Y2, von Zeilen und einer Anzahl, X, von Spalten angeordnet ist;
Bestimmen (820) einer nativen Tensorform basierend auf der ersten IFM und dem einen oder den mehreren ersten Filtern, wobei die native Tensorform eine erste äußere Dimension, eine innere Dimension und eine zweite äußere Dimension umfasst, wobei die native Tensorform die erste IFM und den einen oder die mehreren ersten Filter auf das PE-Array abbildet;
Empfangen (830) einer zweiten IFM und eines oder mehrerer zweiter Filter in einer zweiten Schicht des CNN zur Konvolution unter Verwendung des PE-Arrays;
Umformen (840) der nativen Tensorform basierend auf der zweiten IFM und dem einen oder den mehreren zweiten Filtern, wobei das Umformen ein Vergrößern der inneren Dimension und Verkleinern einer der ersten äußeren Dimension und der zweiten äußeren Dimension umfasst, wobei das Vergrößern und Verkleinern um einen Faktor von F geschieht;
Zuführen (850) des einen oder der mehreren zweiten Filter und der zweiten IFM in das PE-Array zur Konvolution gemäß dem umgeformten nativen Tensor, wobei:
als Reaktion darauf, dass die erste äußere Dimension verkleinert wird, die Konvolution Folgendes umfasst: Aggregieren einer Ausgabe aus einer selben Zeile vom PE über F Runden, um Teilsummen zu erhalten, und
als Reaktion darauf, dass die zweite äußere Dimension verkleinert wird, die Konvolution Folgendes umfasst: Aggregieren von Ausgaben aus allen F Reihen von PEs, um Teilsummen zu erhalten; und
Erhalten (860) eines Ausgabetensor der Konvolution in der zweiten Schicht des CNN durch Aggregieren einer Vielzahl der Teilsummen,
wobei Y1, Y2, X und F ganze Zahlen größer als eins sind, und
wobei die zweite Schicht des CNN nach der ersten Schicht des CNN liegt und die zweite IFM mehr Eingabekanäle als die erste IFM und eine geringere Auflösung als die erste IFM aufweist.

2. Verfahren nach Anspruch 1, wobei jeder des einen oder der mehreren zweiten Filter eine Vielzahl von Kanälen mit 2-dimensionalen, 2D, Kernen umfasst, wobei jeder 2D-Kern eine Dimension von eins mal eins, 1x1, oder drei mal drei, 3x3, aufweist.

3. Verfahren nach Anspruch 2, wobei das Zuführen eines oder mehrerer zweiter Filter in das PE-Array gemäß dem umgeformten nativen Tensor Folgendes umfasst:
Umwandeln des einen oder der mehreren zweiten Filter in eine Matrix gemäß der ersten äußeren Dimension und der inneren Dimension des umgeformten nativen Tensors, wobei als Reaktion darauf, dass jeder 2D-Kern in dem einen oder den mehreren zweiten Filtern die Dimension von eins mal eins aufweist, jede Zeile der Matrix Gewichte aus verschiedenen Eingabekanälen des einen oder der mehreren zweiten Filter umfasst; und
Verteilen von Gewichten in jeder Zeile der Matrix auf verschiedene Spalten von PEs, sodass die Vielzahl von Eingabekanälen gleichzeitig verarbeitet wird.

4. Verfahren nach Anspruch 2, wobei das Zuführen eines oder mehrerer zweiter Filter in das PE-Array gemäß dem umgeformten nativen Tensor Folgendes umfasst:
Umwandeln des einen oder der mehreren zweiten Filter in eine Matrix gemäß der ersten äußeren Dimension und der inneren Dimension des umgeformten nativen Tensors, wobei als Reaktion darauf, dass jeder 2D-Kern in dem einen oder den mehreren zweiten Filtern die Dimension von drei mal drei aufweist und neun Gewichte umfasst, die neun Gewichte in einer selben Zeile der Matrix platziert werden; und
Verteilen der neun Gewichte aus derselben Zeile der Matrix auf verschiedene Spalten von PEs, sodass die Gewichte desselben Kanals gleichzeitig verarbeitet werden;
und optional
wobei das Zuführen der IFM in das PE-Array gemäß dem umgeformten nativen Tensor Folgendes umfasst:
Umwandeln der IFM in eine Matrix gemäß der inneren Dimension und der zweiten äußeren Dimension des umgeformten nativen Tensors; und
Zuführen von Eingabewerten der IFM, die einer Spalte der Matrix entsprechen, in die Puffer einer Zeile von PEs.

5. Verfahren nach Anspruch 1, weiter umfassend:
Aufteilen von Kanälen des einen oder der mehreren Filter in eine Vielzahl von Kanalgruppen, wobei jede Kanalgruppe eine feste Anzahl von Kanälen umfasst, die eine ganze Zahl größer als eins ist; und
Beschneiden jeder der Vielzahl von Kanalgruppen, sodass ein fester Prozentsatz von Gewichten innerhalb jeder Kanalgruppe ungleich null ist.

6. Verfahren nach Anspruch 5, weiter umfassend:
Bestimmen einer Tiefe eines Puffers, der jedem PE im PE-Array zugeordnet ist;
als Reaktion darauf, dass die Tiefe des Puffers größer als die feste Anzahl ist, Konfigurieren des Puffers als einen privaten Speicher für jedes PE; und
als Reaktion darauf, dass die Tiefe des Puffers kleiner als die feste Anzahl ist, Kombinieren des Puffers des PE und eines oder mehrerer Puffer benachbarter PEs als einen gemeinsamen Speicher;
und optional, wobei
der private Speicher jedes PE Eingabewerte speichert, die über die Anzahl, Y1, von Multiplikatoren innerhalb des PE abgerufen werden können, und/oder wobei der gemeinsame Speicher Eingabewerte speichert, die durch die Anzahl, Y1, von Multiplikatoren innerhalb des PE und des einen oder der mehreren benachbarten PEs abgerufen werden können.

7. Verfahren nach Anspruch 1, wobei jede Zeile von PEs mit einer Anzahl, Y1, von Addiererbäumen gekoppelt ist, die jeweils der Anzahl, Y1, von Multiplikatoren innerhalb jedes PE entspricht, wobei jeder Multiplikator innerhalb jedes PE eine Multiplikationsausgabe an einen entsprechenden Addiererbaum zur Aggregation sendet.

8. Verfahren nach Anspruch 1, wobei jeder des einen oder der mehreren zweiten Filter eine Vielzahl von Gewichten ungleich null umfasst, und
das Zuführen des einen oder der mehreren zweiten Filter in das PE-Array zur Konvolution umfasst:
Zuführen jedes Gewichts ungleich null in einen Multiplikator eines entsprechenden PE als ein Index-Wert-Paar, das das Gewicht ungleich null und einen entsprechenden Index umfasst; und
die Konvolution umfasst:
Abrufen eines Eingabewerts aus einem Puffer des entsprechenden PE gemäß dem Index; und
Senden des abgerufenen Werts und des Gewichts ungleich null an den Multiplikator, um einen Ausgabewert zu erhalten; und
Senden der Ausgabe an einen entsprechenden Addiererbaum zur Aggregation mit Ausgaben, die von anderen Multiplikatoren anderer PEs in einer selben Zeile wie das entsprechende PE erzeugt werden.

9. Verfahren nach Anspruch 1, wobei die Anzahl, Y1, von Multiplikatoren innerhalb jedes PE Daten parallel verarbeiten und PEs im PE-Array Daten parallel verarbeiten.

10. System, umfassend einen oder mehrere Prozessoren und einen oder mehrere nichtflüchtige computerlesbare Speicher, die mit dem einen oder den mehreren Prozessoren gekoppelt sind und mit Anweisungen konfiguriert sind, die von dem einen oder den mehreren Prozessoren ausgeführt werden können, um das System zu veranlassen, Operationen durchzuführen, die Folgendes umfassen:
Empfangen (810) einer ersten Eingabemerkmalskarte, IFM, und eines oder mehrerer erster Filter in einer ersten Schicht eines konvolutionellen neuronalen Netzes, CNN, zur Konvolution unter Verwendung eines Verarbeitungselement-, PE, Arrays, wobei jedes PE im PE-Array eine Anzahl, Y1, von Multiplikatoren umfasst und das PE-Array in einer Anzahl, Y2, von Zeilen und einer Anzahl, X, von Spalten angeordnet ist;
Bestimmen (820) einer nativen Tensorform basierend auf der ersten IFM und dem einen oder den mehreren ersten Filtern, wobei die native Tensorform eine erste äußere Dimension, eine innere Dimension und eine zweite äußere Dimension umfasst, wobei die native Tensorform die erste IFM und den einen oder die mehreren ersten Filter auf das PE-Array abbildet;
Empfangen (830) einer zweiten IFM und eines oder mehrerer zweiter Filter in einer zweiten Schicht des CNN zur Konvolution unter Verwendung des PE-Arrays;
Umformen (840) der nativen Tensorform basierend auf der zweiten IFM und dem einen oder den mehreren zweiten Filtern, wobei das Umformen ein Vergrößern der inneren Dimension und Verkleinern einer der ersten äußeren Dimension und der zweiten äußeren Dimension umfasst, wobei das Vergrößern und Verkleinern um einen Faktor von F geschieht;
Zuführen (850) des einen oder der mehreren zweiten Filter und der zweiten IFM in das PE-Array zur Konvolution gemäß dem umgeformten nativen Tensor, wobei:
als Reaktion darauf, dass die erste äußere Dimension verkleinert wird, die Konvolution Folgendes umfasst: Aggregieren einer Ausgabe aus einer selben Zeile vom PE über F Runden, um Teilsummen zu erhalten, und
als Reaktion darauf, dass die zweite äußere Dimension verkleinert wird, die Konvolution Folgendes umfasst: Aggregieren von Ausgaben aus allen F Reihen von PEs, um Teilsummen zu erhalten; und
Erhalten (860) eines Ausgabetensor der Konvolution in der zweiten Schicht des CNN durch Aggregieren einer Vielzahl der Teilsummen,
wobei Y1, Y2, X und F ganze Zahlen größer als eins sind, und
wobei die zweite Schicht des CNN nach der ersten Schicht des CNN liegt und die zweite IFM mehr Eingabekanäle als die erste IFM und eine geringere Auflösung als die erste IFM aufweist.

11. System nach Anspruch 10, wobei die Operationen weiter Folgendes umfassen:
Aufteilen von Kanälen des einen oder der mehreren Filter in eine Vielzahl von Kanalgruppen, wobei jede Kanalgruppe eine feste Anzahl von Kanälen umfasst, die eine ganze Zahl größer als eins ist; und
Beschneiden jedes des einen oder der mehreren Filter, sodass nur ein Kanal in jeder der Vielzahl von Kanalgruppen Eingabewerte ungleich null aufweist und andere Kanäle in jeder Kanalgruppe nur Nullen umfassen, und optional,
wobei die Operationen weiter Folgendes umfassen:
Bestimmen einer Tiefe eines Puffers, der jedem PE im PE-Array zugeordnet ist;
als Reaktion darauf, dass die Tiefe des Puffers größer als die feste Anzahl ist, Konfigurieren des Puffers als einen privaten Speicher für jedes PE; und
als Reaktion darauf, dass die Tiefe des Puffers kleiner als die feste Anzahl ist, Kombinieren des Puffers des PE und eines oder mehrerer Puffer benachbarter PEs als einen gemeinsamen Speicher.

12. System nach Anspruch 10, wobei jeder des einen oder der mehreren zweiten Filter eine Vielzahl von Kanälen mit 2-dimensionalen, 2D, Kernen umfasst, wobei jeder 2D-Kern eine Dimension von eins mal eins, 1×1, oder drei mal drei, 3×3, aufweist, und optional,
wobei das Zuführen eines oder mehrerer zweiter Filter in das PE-Array gemäß dem umgeformten nativen Tensor Folgendes umfasst:
Umwandeln des einen oder der mehreren zweiten Filter in eine Matrix gemäß der ersten äußeren Dimension und der inneren Dimension des umgeformten nativen Tensors, wobei als Reaktion darauf, dass jeder 2D-Kern in dem einen oder den mehreren zweiten Filtern die Dimension von eins mal eins aufweist, jede Zeile der Matrix Gewichte aus verschiedenen Eingabekanälen des einen oder der mehreren zweiten Filter umfasst; und
Verteilen von Gewichten in jeder Zeile der Matrix auf verschiedene Spalten von PEs, sodass die Vielzahl von Eingabekanälen gleichzeitig verarbeitet wird.

13. Nichtflüchtiges computerlesbares Speichermedium, das mit Anweisungen konfiguriert ist, die von einem oder mehreren Prozessoren ausgeführt werden können, um den einen oder die mehreren Prozessoren zu veranlassen, Operationen durchzuführen, die Folgendes umfassen:
Empfangen (810) einer ersten Eingabemerkmalskarte, IFM, und eines oder mehrerer erster Filter in einer ersten Schicht eines konvolutionellen neuronalen Netzes, CNN, zur Konvolution unter Verwendung eines Verarbeitungselement-, PE, Arrays, wobei jedes PE im PE-Array eine Anzahl, Y1, von Multiplikatoren umfasst und das PE-Array in einer Anzahl, Y2, von Zeilen und einer Anzahl, X, von Spalten angeordnet ist;
Bestimmen (820) einer nativen Tensorform basierend auf der ersten IFM und dem einen oder den mehreren ersten Filtern, wobei die native Tensorform eine erste äußere Dimension, eine innere Dimension und eine zweite äußere Dimension umfasst, wobei die native Tensorform die erste IFM und den einen oder die mehreren ersten Filter auf das PE-Array abbildet;
Empfangen (830) einer zweiten IFM und eines oder mehrerer zweiter Filter in einer zweiten Schicht des CNN zur Konvolution unter Verwendung des PE-Arrays;
Umformen (840) der nativen Tensorform basierend auf der zweiten IFM und dem einen oder den mehreren zweiten Filtern, wobei das Umformen ein Vergrößern der inneren Dimension und Verkleinern einer der ersten äußeren Dimension und der zweiten äußeren Dimension umfasst, wobei das Vergrößern und Verkleinern um einen Faktor von F geschieht;
Zuführen (850) des einen oder der mehreren zweiten Filter und der zweiten IFM in das PE-Array zur Konvolution gemäß dem umgeformten nativen Tensor, wobei:
als Reaktion darauf, dass die erste äußere Dimension verkleinert wird, die Konvolution Folgendes umfasst: Aggregieren einer Ausgabe aus einer selben Zeile vom PE über F Runden, um Teilsummen zu erhalten, und
als Reaktion darauf, dass die zweite äußere Dimension verkleinert wird, die Konvolution Folgendes umfasst: Aggregieren von Ausgaben aus allen F Reihen von PEs, um Teilsummen zu erhalten; und
Erhalten (860) eines Ausgabetensor der Konvolution in der zweiten Schicht des CNN durch Aggregieren einer Vielzahl der Teilsummen,
wobei Y1, Y2, X und F ganze Zahlen größer als eins sind; und
wobei die zweite Schicht des CNN nach der ersten Schicht des CNN liegt und die zweite IFM mehr Eingabekanäle als die erste IFM und eine geringere Auflösung als die erste IFM aufweist.

## Revendications

1. Procédé mis en œuvre par ordinateur, comprenant :
la réception (810) d'une première carte de caractéristiques d'entrée, IFM, et d'un ou de plusieurs premiers filtres au niveau d'une première couche d'un réseau neuronal convolutif, CNN, pour la convolution en utilisant un réseau d'éléments de traitement, PE, dans lequel chaque PE dans le réseau de PE comprend un nombre, Y1, de multiplicateurs et le réseau de PE est organisé selon un nombre, Y2, de lignes et un nombre, X, de colonnes ;
la détermination (820) d'une forme de tenseur natif basée sur la première IFM et les un ou plusieurs premiers filtres, dans lequel la forme de tenseur native comprend une première dimension extérieure, une dimension intérieure et une seconde dimension extérieure, dans lequel la forme de tenseur native mappe la première IFM et les un ou plusieurs premiers filtres dans le réseau de PE ;
la réception (830) d'une seconde IFM et d'un ou de plusieurs seconds filtres au niveau d'une seconde couche du CNN pour une convolution en utilisant le réseau de PE ;
le remodelage (840) de la forme de tenseur natif sur la base de la seconde IFM et d'un ou de plusieurs seconds filtres, dans lequel le remodelage comprend l'agrandissement de la dimension intérieure et la réduction de l'une parmi la première dimension extérieure et la seconde dimension extérieure, l'agrandissement et la réduction étant effectués par un facteur de F ;
l'alimentation (850) du réseau de PE avec les un ou plusieurs seconds filtres et la seconde IFM pour une convolution selon le tenseur natif remodelé, dans lequel :
en réponse à la réduction de la première dimension extérieure, la convolution comprend : l'agrégation d'une sortie provenant d'une même ligne de PE pendant F tours pour obtenir des sommes partielles, et
en réponse à la réduction de la seconde dimension extérieure, la convolution comprend : l'agrégation de sorties de chaque F lignes de PE pour obtenir des sommes partielles ; et
l'obtention (860) d'un tenseur de sortie de la convolution au niveau de la seconde couche du CNN en agrégeant une pluralité de sommes partielles,
dans lequel Y1, Y2, X et F sont tous des entiers supérieurs à un, et
dans lequel la seconde couche du CNN se trouve après la première couche du CNN, et la seconde IFM comprend plus de canaux d'entrée que la première IFM et une résolution inférieure à la première IFM.

2. Procédé selon la revendication 1, dans lequel chacun des un ou plusieurs seconds filtres comprend une pluralité de canaux de noyaux bidimensionnels, 2D, chaque noyau 2D présentant une dimension de un par un, 1x1, ou de trois par trois, 3x3.

3. Procédé selon la revendication 2, dans lequel l'alimentation du réseau de PE avec les un ou plusieurs seconds filtres selon le tenseur natif remodelé comprend :
la transformation des un ou plusieurs seconds filtres en une matrice selon la première dimension extérieure et la dimension intérieure du tenseur natif remodelé, dans lequel en réponse au fait que chaque noyau 2D dans les un ou plusieurs seconds filtres présente la dimension de un par un, chaque ligne de la matrice comprend des poids provenant de différents canaux d'entrée des un ou plusieurs seconds filtres ; et
la répartition de poids dans chaque ligne de la matrice sur différentes colonnes de PE de sorte que la pluralité de canaux d'entrée soient traités simultanément en une fois.

4. Procédé selon la revendication 2, dans lequel l'alimentation du réseau de PE avec les un ou plusieurs seconds filtres selon le tenseur natif remodelé comprend :
la transformation des un ou plusieurs seconds filtres en une matrice selon la première dimension extérieure et la dimension intérieure du tenseur natif remodelé, dans lequel en réponse au fait que chaque noyau 2D dans les un ou plusieurs seconds filtres présente la dimension de trois par trois et comprend neuf poids, les neuf poids sont placés sur une même ligne de la matrice ; et
la répartition des neuf poids de la même ligne de la matrice sur différentes colonnes de PE de sorte que les poids du même canal soient traités simultanément en une fois ;
et, facultativement,
dans lequel l'alimentation du réseau de PE avec l'IFM selon le tenseur natif remodelé comprend :
la transformation de l'IFM en une matrice selon la dimension intérieure et la seconde dimension extérieure du tenseur natif remodelé ; et
l'alimentation de mémoires tampons d'une ligne de PE avec des valeurs d'entrée de l'IFM correspondant à une colonne de la matrice.

5. Procédé selon la revendication 1, comprenant en outre :
la division de canaux des un ou plusieurs filtres en une pluralité de groupes de canaux, chaque groupe de canaux comprenant un nombre fixe de canaux qui est un entier supérieur à un ; et
l'élagage de chacun de la pluralité de groupes de canaux de sorte qu'un pourcentage fixe de poids au sein de chaque groupe de canaux soit non nul.

6. Procédé selon la revendication 5, comprenant en outre :
la détermination d'une profondeur d'une mémoire tampon associée à chaque PE dans le réseau de PE ;
en réponse au fait que la profondeur de la mémoire tampon est supérieure au nombre fixe, la configuration de la mémoire tampon en tant que mémoire privée pour chaque PE ; et
en réponse au fait que la profondeur du tampon est inférieure au nombre fixe, la combinaison de la mémoire tampon du PE et d'un ou de plusieurs mémoires tampons de PE voisins en tant que mémoire partagée ;
et, facultativement, dans lequel
la mémoire privée de chaque PE stocke des valeurs d'entrée qui peuvent être récupérées par le nombre, Y1, de multiplicateurs au sein du PE, et/ou, dans lequel la mémoire partagée stocke des valeurs d'entrée qui peuvent être récupérées par le nombre, Y1, de multiplicateurs au sein du PE et des un ou plusieurs PE voisins.

7. Procédé selon la revendication 1, dans lequel chaque ligne de PE est couplée à un nombre, Y1, d'arbres additionneurs respectifs correspondant au nombre, Y1, de multiplicateurs au sein de chaque PE, dans lequel chaque multiplicateur au sein de chaque PE envoie une sortie de multiplication à un arbre additionneur correspondant pour agrégation.

8. Procédé selon la revendication 1, dans lequel chacun des un ou plusieurs seconds filtres comprend une pluralité de poids non nuls, et
l'alimentation du réseau de PE avec les un ou plusieurs seconds filtres pour une convolution comprend :
l'alimentation de chaque poids non nul dans un multiplicateur d'un PE correspondant en tant que paire indice-valeur comprenant le poids non nul et un indice correspondant ; et
la convolution comprend :
la récupération d'une valeur d'entrée à partir d'une mémoire tampon du PE correspondant selon l'index ; et
l'envoi de la valeur récupérée et du poids non nul au multiplicateur pour obtenir une sortie ; et
l'envoi de la sortie à un arbre additionneur correspondant pour agrégation avec des sorties générées par d'autres multiplicateurs d'autres PE dans la même ligne que le PE correspondant.

9. Procédé selon la revendication 1, dans lequel le nombre, Y1, de multiplicateurs au sein de chaque PE traite des données en parallèle, et des PE dans le réseau de PE traitent des données en parallèle.

10. Système comprenant un ou plusieurs processeurs et une ou plusieurs mémoires non transitoires lisibles par ordinateur couplées aux un ou plusieurs processeurs et configurées avec des instructions exécutables par les un ou plusieurs processeurs pour amener le système à effectuer des opérations comprenant :
la réception (810) d'une première carte de caractéristiques d'entrée, IFM, et d'un ou plusieurs premiers filtres au niveau d'une première couche d'un réseau neuronal convolutif, CNN, pour une convolution en utilisant un réseau d'éléments de traitement, PE, dans lequel chaque PE dans le réseau de PE comprend un nombre, Y1, de multiplicateurs, et le réseau de PE est organisé selon un nombre, Y2, de lignes et un nombre, X, de colonnes ;
la détermination (820) d'une forme de tenseur natif sur la base de la première IFM et des un ou plusieurs premiers filtres, dans lequel la forme de tenseur natif comprend une première dimension extérieure, une dimension intérieure et une seconde dimension extérieure, dans lequel la forme de tenseur natif mappe la première IFM et les un ou plusieurs premiers filtres dans le réseau de PE ;
la réception (830) d'une seconde IFM et d'un ou de plusieurs seconds filtres au niveau d'une seconde couche du CNN pour une convolution en utilisant le réseau de PE ;
le remodelage (840) de la forme de tenseur natif sur la base de la seconde IFM et d'un ou de plusieurs seconds filtres, dans lequel le remodelage comprend l'agrandissement de la dimension intérieure et la réduction de l'une parmi la première dimension extérieure et la seconde dimension extérieure, l'agrandissement et la réduction étant effectués par un facteur de F ;
l'alimentation (850) du réseau de PE avec les un ou plusieurs seconds filtres et la seconde IFM pour une convolution selon le tenseur natif remodelé, dans lequel :
en réponse à la réduction de la première dimension extérieure, la convolution comprend : l'agrégation d'une sortie provenant d'une même ligne de PE pendant F tours pour obtenir des sommes partielles, et
en réponse à la réduction de la seconde dimension extérieure, la convolution comprend : l'agrégation de sorties de chaque F lignes de PE pour obtenir des sommes partielles ; et
l'obtention (860) d'un tenseur de sortie de la convolution au niveau de la seconde couche du CNN en agrégeant une pluralité de sommes partielles,
dans lequel Y1, Y2, X et F sont tous des entiers supérieurs à un, et
dans lequel la seconde couche du CNN se trouve après la première couche du CNN, et la seconde IFM comprend plus de canaux d'entrée que la première IFM et une résolution inférieure à la première IFM.

11. Système selon la revendication 10, dans lequel les opérations comprennent en outre :
la division de canaux des un ou plusieurs filtres en une pluralité de groupes de canaux, chaque groupe de canaux comprenant un nombre fixe de canaux qui est un entier supérieur à un ; et
l'élagage de chacun des un ou plusieurs filtres de sorte que seul un canal dans chacun de la pluralité de groupes de canaux comprend des valeurs d'entrée non nulles et que d'autres canaux dans chaque groupe de canaux comprennent tous des zéros, et, facultativement,
dans lequel les opérations comprennent en outre :
la détermination d'une profondeur d'une mémoire tampon associée à chaque PE dans le réseau de PE ;
en réponse au fait que la profondeur de la mémoire tampon est supérieure au nombre fixe, la configuration de la mémoire tampon en tant que mémoire privée pour chaque PE ; et
en réponse au fait que la profondeur du tampon est inférieure au nombre fixe, la combinaison de la mémoire tampon du PE et d'un ou de plusieurs mémoires tampons de PE voisins en tant que mémoire partagée.

12. Système selon la revendication 10, dans lequel chacun des un ou plusieurs seconds filtres comprend une pluralité de canaux de noyaux bidimensionnels, 2D, chaque noyau 2D présentant une dimension de un par un, 1x1, ou de trois par trois, 3x3, et, facultativement,
dans lequel l'alimentation du réseau de PE avec les un ou plusieurs seconds filtres selon le tenseur natif remodelé comprend :
la transformation des un ou plusieurs seconds filtres en une matrice selon la première dimension extérieure et la dimension intérieure du tenseur natif remodelé, dans lequel en réponse au fait que chaque noyau 2D dans les un ou plusieurs seconds filtres présente la dimension de un par un, chaque ligne de la matrice comprend des poids provenant de différents canaux d'entrée des un ou plusieurs seconds filtres ; et
la répartition de poids dans chaque ligne de la matrice sur différentes colonnes de PE de sorte que la pluralité de canaux d'entrée soient traités simultanément en une fois.

13. Support de stockage non transitoire lisible par ordinateur configuré avec des instructions exécutables par un ou plusieurs processeurs pour amener les un ou plusieurs processeurs à effectuer des opérations comprenant :
la réception (810) d'une première carte de caractéristiques d'entrée, IFM, et d'un ou plusieurs premiers filtres au niveau d'une première couche d'un réseau neuronal convolutif, CNN, pour une convolution en utilisant un réseau d'éléments de traitement, PE, dans lequel chaque PE dans le réseau de PE comprend un nombre, Y1, de multiplicateurs, et le réseau de PE est organisé selon un nombre, Y2, de lignes et un nombre, X, de colonnes ;
la détermination (820) d'une forme de tenseur natif sur la base de la première IFM et des un ou plusieurs premiers filtres, dans lequel la forme de tenseur natif comprend une première dimension extérieure, une dimension intérieure et une seconde dimension extérieure, dans lequel la forme de tenseur natif mappe la première IFM et les un ou plusieurs premiers filtres dans le réseau de PE ;
la réception (830) d'une seconde IFM et d'un ou de plusieurs seconds filtres au niveau d'une seconde couche du CNN pour une convolution en utilisant le réseau de PE ;
le remodelage (840) de la forme de tenseur natif sur la base de la seconde IFM et d'un ou de plusieurs seconds filtres, dans lequel le remodelage comprend l'agrandissement de la dimension intérieure et la réduction de l'une parmi la première dimension extérieure et la seconde dimension extérieure, l'agrandissement et la réduction étant effectués par un facteur de F ;
l'alimentation (850) du réseau de PE avec les un ou plusieurs seconds filtres et la seconde IFM pour une convolution selon le tenseur natif remodelé, dans lequel :
en réponse à la réduction de la première dimension extérieure, la convolution comprend : l'agrégation d'une sortie provenant d'une même ligne de PE pendant F tours pour obtenir des sommes partielles, et
en réponse à la réduction de la seconde dimension extérieure, la convolution comprend : l'agrégation de sorties de chaque F lignes de PE pour obtenir des sommes partielles ; et
l'obtention (860) d'un tenseur de sortie de la convolution au niveau de la seconde couche du CNN en agrégeant une pluralité de sommes partielles,
dans lequel Y1, Y2, X et F sont tous des entiers supérieurs à un ; et
dans lequel la seconde couche du CNN se trouve après la première couche du CNN, et la seconde IFM comprend plus de canaux d'entrée que la première IFM et une résolution inférieure à la première IFM.
